# EUROPEAN PATENT APPLICATION

(11) **EP 4 383 855 A1**
(43) Date of publication of application: **12.06.2024**
(21) Application number: 22863476.2
(22) Date of filing: 30.08.2022
(51) Int. Cl.: H04W 56/00, H04L 5/00

(54) **COMMUNICATION METHOD AND APPARATUS**

(30) Priority: 31.08.2021 CN 202111015739; 27.04.2022 CN 202210454297
(71) Applicant: Huawei Technologies Co., Ltd., Shenzhen, Guangdong 518129 (CN)
(72) Inventor: FAN, Bo, Shenzhen, Guangdong 518129 (CN); ZHANG, Xi, Shenzhen, Guangdong 518129 (CN); YUAN, Shitong, Shenzhen, Guangdong 518129 (CN)
(74) Representative: Epping - Hermann - Fischer
(86) International application number: PCT/CN2022/115966
(87) International publication number: WO 2023/030341

(57) **Abstract**

This application provides a communication method and apparatus, to enable uplink transmission of a terminal to be synchronized with a plurality of stations corresponding to one cell, and avoid a performance loss of uplink transmission. The method includes: The terminal determines a first timing advance TA or a first timing advance group TAG, to send a corresponding uplink signal to a network device based on the first TA or the first TAG. The first TA is one of a plurality of TAs corresponding to one cell of the network device, and the first TAG is one of a plurality of TAGs corresponding to one cell of the network device.

## Description

This application claims priority to Chinese Patent Application No. 202111015739.6, filed with the China National Intellectual Property Administration on August 31, 2021 and entitled "COMMUNICATION METHOD AND APPARATUS", and to Chinese Patent Application No. 202210454297.3, filed with the China National Intellectual Property Administration on April 27, 2022 and entitled "COMMUNICATION METHOD AND APPARATUS", which are incorporated herein by reference in their entireties.

### TECHNICAL FIELD

This application relates to the communication field, and in particular, to a communication method and apparatus.

### BACKGROUND

In a 5^{th} generation (5^{th} generation, 5G) mobile communication system, before performing uplink data transmission, each terminal needs to obtain an uplink timing advance (timing advance, TA) of a cell (cell) in which the terminal is located. Each terminal needs to send an uplink signal to a same station based on a TA of the terminal, to ensure that uplink signals of a plurality of terminals can arrive at the station at the same time, that is, to ensure that all the terminals implement uplink synchronization. In this way, the station can successfully receive the uplink signal of each terminal. However, when one cell of a network device corresponds to a plurality of stations, uplink transmission needs to be performed with the plurality of stations at the same time. Because distances between the terminal and the plurality of stations are usually unequal, the uplink signal sent by the terminal based on a TA of the cell or uplink transmission of the terminal cannot be synchronized with the plurality of stations. Consequently, a performance loss of uplink transmission is caused.

### SUMMARY

This application provides a communication method and apparatus, to enable uplink transmission of a terminal to be synchronized with a plurality of stations corresponding to one cell, and avoid a performance loss of uplink transmission.

The following technical solutions are used in this application.

According to a first aspect, a communication method is provided. The method includes: A terminal determines a first timing advance TA or a first timing advance group TAG, to send a corresponding uplink signal to a network device based on the first TA or the first TAG. The first TA is one of a plurality of TAs corresponding to one cell of the network device, and the first TAG is one of a plurality of TAGs corresponding to one cell of the network device.

It can be learned from the method according to the first aspect that when one cell of the network device corresponds to a plurality of stations, the terminal may configure a plurality of TAs or a plurality of TAGs corresponding to the cell. In this way, when performing uplink transmission with a station of the network device, the terminal may select a proper TA or TAG, for example, the first TA or the first TAG, to send the corresponding uplink signal, to enable uplink transmission of the terminal to be synchronized with the plurality of stations and avoid a performance loss of uplink transmission.

In a possible design solution, the first TA or the first TAG is determined based on first information, and the first information indicates the first TA or the first TAG corresponding to the uplink signal. In other words, the network device may indicate a currently required TA or TAG by using the first information based on an actual situation, to implement more flexible TA or TAG selection. A selected TA or TAG better matches an uplink transmission distance of the terminal, and uplink transmission is more stable.

Optionally, the first information is carried in one or more of the following: a radio resource control RRC message, a medium access control-control element MAC-CE message, a downlink control information DCI message, a spatial relationship, a transmission configuration indication TCI state, or quasi-colocation QCL information.

In another possible design solution, the first TA or the first TAG is determined based on a first signal, and the first signal is a synchronization signal and physical broadcast channel block SSB, a spatial relationship reference signal, or a path loss reference signal corresponding to the uplink signal. In other words, the terminal may determine the first TA or the first TAG based on a spatial relationship between signals, and the network device does not need to additionally indicate the first TA or the first TAG. In this way, a quantity of interactions between the network device and the terminal may be reduced, thereby reducing communication overheads, and improving communication efficiency.

Optionally, the method according to the first aspect may further include: The terminal receives second information from the network device. The second information indicates the first signal.

Further, the second information is QCL information, and a type of the QCL information includes one or more of the following: a type A, a type B, a type C, a type D, a type E, a type F, or a type G. In other words, the first signal may be indicated by a type field in QCL information. In this way, signaling multiplexing may be implemented, so that the communication overheads are reduced and the communication efficiency is improved.

Optionally, the first signal includes one or more of the following: a sounding reference signal SRS, a synchronization signal and physical broadcast channel block SSB, a channel state information reference signal CSI-RS, a tracking reference signal TRS, a physical downlink control channel PDCCH, a physical downlink shared channel PDSCH, a physical uplink control channel PUCCH, or a physical uplink shared channel PUSCH.

Optionally, an association relationship exists between the first signal and the first TA or the first TAG, so that the terminal can accurately determine the first TA or the first TAG based on the association relationship.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, before that a terminal determines a first TA or a first TAG, the method according to the first aspect may further include: The terminal receives configuration information from the network device. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the plurality of TA offsets are in one-to-one correspondence with the plurality of TAGs. Optionally, before that a terminal determines a first TA or a first TAG, the method according to the first aspect may further include: The terminal receives a random access response RAR message from the network device. The RAR message includes an initial TA value corresponding to the first TAG, and the initial TA value corresponding to the first TAG and a TA offset corresponding to the first TAG are used to determine a TA corresponding to the first TAG.

Further, the method according to the first aspect may further include: The terminal determines, based on a field in the RAR message, a TAG corresponding to an initial TA value in the RAR message. Alternatively, the terminal determines, based on an SSB corresponding to the RAR message, a TAG corresponding to an initial TA value in the RAR message.

Further, the SSB corresponding to the RAR message is associated with one TAG, and that the terminal determines, based on an SSB corresponding to the RAR message, a TAG corresponding to an initial TA value in the RAR message includes: The terminal determines that the TAG associated with the SSB is the TAG corresponding to the initial TA value in the RAR message. It can be learned that the network device configures, for the terminal, a TA offset and an initial TA value that correspond to a TAG, so that the terminal can determine a TA corresponding to each TAG. In this way, even if the network device indicates only a TAG, the terminal can determine a corresponding TA based on the TAG, so that uplink synchronization is implemented.

In a possible design solution, the uplink signal includes one or more of the following: an SRS, a PUSCH, or a PUCCH.

According to a second aspect, a communication method is provided. The method includes: A terminal receives first information from a network device, and sends an uplink signal to the network device based on a first TA or a first TAG. The first information indicates the first TA or the first TAG corresponding to the uplink signal. The first TA is one of a plurality of TAs corresponding to one cell of the network device, and the first TAG is one of a plurality of TAGs corresponding to one cell of the network device.

In a possible design solution, the first information is carried in one or more of the following: an RRC message, a MAC-CE message, a DCI message, a spatial relationship, a TCI state, or QCL information.

In a possible design solution, before that a terminal sends an uplink signal to the network device based on a first TA or a first TAG, the method according to the second aspect may further include: The terminal receives configuration information from the network device. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the plurality of TA offsets are in one-to-one correspondence with the plurality of TAGs. Optionally, before that a terminal sends an uplink signal to the network device based on a first TA or a first TAG, the method according to the second aspect may further include: The terminal receives a random access response RAR message from the network device. The RAR message includes an initial TA value corresponding to the first TAG, and the initial TA value corresponding to the first TAG and a TA offset corresponding to the first TAG are used to determine a TA corresponding to the first TAG.

Further, the method according to the second aspect may further include: The terminal determines, based on a field in the RAR message, a TAG corresponding to an initial TA value in the RAR message. Alternatively, the terminal determines, based on an SSB corresponding to the RAR message, a TAG corresponding to an initial TA value in the RAR message.

Further, the SSB corresponding to the RAR message is associated with one TAG, and that the terminal determines, based on an SSB corresponding to the RAR message, a TAG corresponding to an initial TA value in the RAR message includes: The terminal determines that the TAG associated with the SSB is the TAG corresponding to the initial TA value in the RAR message. In a possible design solution, the uplink signal includes one or more of the following: an SRS, a PUSCH, or a PUCCH.

In addition, for technical effects of the method according to the second aspect, refer to the technical effects of the method according to the first aspect. Details are not described herein again.

According to a third aspect, a communication method is provided. The method includes: A terminal determines a first TA or a first TAG based on a first signal, to send a corresponding uplink signal to a network device based on the first TA or the first TAG. The first signal is an SSB, a spatial relationship reference signal, or a path loss reference signal corresponding to the uplink signal. The first TA is one of a plurality of TAs corresponding to one cell of the network device, and the first TAG is one of a plurality of TAGs corresponding to one cell of the network device. Optionally, the method according to the third aspect may further include: The terminal receives second information from the network device. The second information indicates the first signal. Further, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, an association relationship exists between the first signal and the first TA or the first TAG.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, before that a terminal determines a first TA or a first TAG based on a first signal, the method according to the third aspect may further include: The terminal receives configuration information from the network device. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the plurality of TA offsets are in one-to-one correspondence with the plurality of TAGs. Optionally, before that a terminal determines a first TA or a first TAG based on a first signal, the method according to the third aspect may further include: The terminal receives a random access response RAR message from the network device. The RAR message includes an initial TA value corresponding to the first TAG, and the initial TA value corresponding to the first TAG and a TA offset corresponding to the first TAG are used to determine a TA corresponding to the first TAG. Further, the method according to the third aspect may further include: The terminal determines, based on a field in the RAR message, a TAG corresponding to an initial TA value in the RAR message. Alternatively, the terminal determines, based on an SSB corresponding to the RAR message, a TAG corresponding to an initial TA value in the RAR message.

Further, the SSB corresponding to the RAR message is associated with one TAG, and that the terminal determines, based on an SSB corresponding to the RAR message, a TAG corresponding to an initial TA value in the RAR message includes: The terminal determines that the TAG associated with the SSB is the TAG corresponding to the initial TA value in the RAR message. In a possible design solution, the uplink signal includes one or more of the following: an SRS, a PUSCH, or a PUCCH.

In addition, for technical effects of the method according to the third aspect, refer to the technical effects of the method according to the first aspect. Details are not described herein again.

According to a fourth aspect, a communication method is provided. The method includes: A network device sends configuration information to a terminal, and receives an uplink signal from the terminal. The configuration information includes one or more of the following: a plurality of TAGs corresponding to one cell of the network device or a plurality of TA offsets corresponding to one cell of the network device.

In a possible design solution, before that a network device receives an uplink signal from the terminal, the method according to the fourth aspect may further include: The network device sends first information to the terminal. The first information indicates a first TA or a first TAG corresponding to the uplink signal, the first TAG is one of the plurality of TAGs, and the first TA is one TA corresponding to one of the plurality of TA offsets.

Optionally, the first information is carried in one or more of the following: an RRC message, a MAC-CE message, a DCI message, a spatial relationship, a TCI state, or QCL information.

In another possible design solution, before that a network device receives an uplink signal from the terminal, the method according to the fourth aspect may further include: The network device sends second information to the terminal. The second information indicates a first signal, the first signal is an SSB, a spatial relationship reference signal, or a path loss reference signal corresponding to the uplink signal, the first signal is used to determine a first TA or a first TAG corresponding to the uplink signal, the first TAG is one of the plurality of TAGs, and the first TA is one TA corresponding to one of the plurality of TA offsets.

Optionally, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, the configuration information further includes an association relationship between the first signal and the first TA or the first TAG.

In a possible design solution, before that a network device receives an uplink signal from the terminal, the method according to the fourth aspect may further include: The network device sends a RAR message to the terminal. The RAR message includes an initial TA value corresponding to the first TAG.

Optionally, a field in the RAR message is used to determine a TAG corresponding to an initial TA value in the RAR message; or an SSB corresponding to the RAR message is used to determine a TAG corresponding to an initial TA value in the RAR message.

Further, the SSB corresponding to the RAR message is associated with one TAG, and the TAG associated with the SSB is the TAG corresponding to the initial TA value in the RAR message.

In a possible design solution, the uplink signal includes one or more of the following: an SRS, a PUSCH, or a PUCCH.

In a possible design solution, each of the plurality of TA offsets corresponds to at least a part of the plurality of TAGs.

Optionally, the plurality of TA offsets are in one-to-one correspondence with the plurality of TAGs. In addition, for technical effects of the method according to the fourth aspect, refer to the technical effects of the method according to the first aspect. Details are not described herein again. According to a fifth aspect, a communication apparatus is provided. The apparatus includes modules configured to perform the method according to the first aspect, for example, a processing module and a transceiver module. The processing module is configured to determine a first timing advance TA or a first timing advance group TAG, to control, based on the first TA or the first TAG, the transceiver module to send a corresponding uplink signal to a network device. The first TA is one of a plurality of TAs corresponding to one cell of the network device, and the first TAG is one of a plurality of TAGs corresponding to one cell of the network device.

In a possible design solution, the first TA or the first TAG is determined based on first information, and the first information indicates the first TA or the first TAG corresponding to the uplink signal. Optionally, the first information is carried in one or more of the following: an RRC message, a MAC-CE message, a DCI message, a spatial relationship, a TCI state, or QCL information.

In another possible design solution, the first TA or the first TAG is determined based on a first signal, and the first signal is an SSB, a spatial relationship reference signal, or a path loss reference signal corresponding to the uplink signal.

Optionally, the transceiver module is further configured to receive second information from the network device. The second information indicates the first signal.

Further, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, an association relationship exists between the first signal and the first TA or the first TAG.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, the transceiver module is further configured to receive configuration information from the network device before the processing module determines the first TA or the first TAG. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the plurality of TA offsets are in one-to-one correspondence with the plurality of TAGs. Optionally, the transceiver module is further configured to receive a random access response RAR message from the network device before the processing module determines the first TA or the first TAG. The RAR message includes an initial TA value corresponding to the first TAG, and the initial TA value corresponding to the first TAG and a TA offset corresponding to the first TAG are used to determine a TA corresponding to the first TAG.

Further, the processing module is further configured to determine, based on a field in the RAR message, a TAG corresponding to an initial TA value in the RAR message. Alternatively, the processing module is further configured to determine, based on an SSB corresponding to the RAR message, a TAG corresponding to an initial TA value in the RAR message.

Further, the SSB corresponding to the RAR message is associated with one TAG, and the processing module is further configured to determine that the TAG associated with the SSB is the TAG corresponding to the initial TA value in the RAR message.

In a possible design solution, the uplink signal includes one or more of the following: an SRS, a PUSCH, or a PUCCH.

Optionally, the transceiver module may alternatively include a sending module and a receiving module. The sending module is configured to implement a sending function of the apparatus according to the fifth aspect, and the receiving module is configured to implement a receiving function of the apparatus according to the fifth aspect.

Optionally, the apparatus according to the fifth aspect may further include a storage module, and the storage module stores a program or instructions. When the processing module executes the program or the instructions, the apparatus may be enabled to perform the method according to the first aspect.

It should be noted that the apparatus according to the fifth aspect may be a terminal, may be a chip (system) or another part or component that may be disposed in the terminal, or may be an apparatus including the terminal. This is not limited in this application.

In addition, for technical effects of the apparatus according to the fifth aspect, refer to the technical effects of the method according to the first aspect. Details are not described herein again. According to a sixth aspect, a communication apparatus is provided. The apparatus includes modules configured to perform the method according to the second aspect, for example, a processing module and a transceiver module. The transceiver module is configured to receive first information from a network device. The processing module is configured to control, based on a first TA or a first TAG, the transceiver module to send an uplink signal to the network device. The first information indicates the first TA or the first TAG corresponding to the uplink signal. The first TA is one of a plurality of TAs corresponding to one cell of the network device, and the first TAG is one of a plurality of TAGs corresponding to one cell of the network device.

In a possible design solution, the first information is carried in one or more of the following: an RRC message, a MAC-CE message, a DCI message, a spatial relationship, a TCI state, or QCL information.

In a possible design solution, the transceiver module is further configured to receive configuration information from the network device before the processing module controls, based on the first TA or the first TAG, the transceiver module to send the uplink signal to the network device. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the plurality of TA offsets are in one-to-one correspondence with the plurality of TAGs. Optionally, the transceiver module is further configured to receive a random access response RAR message from the network device before the processing module controls, based on the first TA or the first TAG, the transceiver module to send the uplink signal to the network device. The RAR message includes an initial TA value corresponding to the first TAG, and the initial TA value corresponding to the first TAG and a TA offset corresponding to the first TAG are used to determine a TA corresponding to the first TAG.

Further, the processing module is further configured to determine, based on a field in the RAR message, a TAG corresponding to an initial TA value in the RAR message. Alternatively, the processing module is further configured to determine, based on an SSB corresponding to the RAR message, a TAG corresponding to an initial TA value in the RAR message.

Further, the SSB corresponding to the RAR message is associated with one TAG, and the processing module is further configured to determine that the TAG associated with the SSB is the TAG corresponding to the initial TA value in the RAR message. In a possible design solution, the uplink signal includes one or more of the following: an SRS, a PUSCH, or a PUCCH. Optionally, the transceiver module may alternatively include a sending module and a receiving module. The sending module is configured to implement a sending function of the apparatus according to the sixth aspect, and the receiving module is configured to implement a receiving function of the apparatus according to the sixth aspect.

Optionally, the apparatus according to the sixth aspect may further include a storage module, and the storage module stores a program or instructions. When the processing module executes the program or the instructions, the apparatus may be enabled to perform the method according to the second aspect.

It should be noted that the apparatus according to the sixth aspect may be a terminal, may be a chip (system) or another part or component that may be disposed in the terminal, or may be an apparatus including the terminal. This is not limited in this application.

In addition, for technical effects of the apparatus according to the sixth aspect, refer to the technical effects of the method according to the first aspect. Details are not described herein again.

According to a seventh aspect, a communication apparatus is provided. The apparatus includes modules configured to perform the method according to the third aspect, for example, a processing module and a transceiver module. The processing module is configured to determine a first TA or a first TAG based on a first signal, to control, based on the first TA or the first TAG, the transceiver module to send a corresponding uplink signal to a network device. The first signal is an SSB, a spatial relationship reference signal, or a path loss reference signal corresponding to the uplink signal. The first TA is one of a plurality of TAs corresponding to one cell of the network device, and the first TAG is one of a plurality of TAGs corresponding to one cell of the network device. Optionally, the transceiver module is further configured to receive second information from the network device. The second information indicates the first signal.

Further, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, an association relationship exists between the first signal and the first TA or the first TAG.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, the transceiver module is further configured to receive configuration information from the network device before the processing module determines the first TA or the first TAG based on the first signal. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA. Optionally, each of the plurality of TA offsets corresponds to at least a part of the plurality of TAGs. Optionally, the plurality of TA offsets are in one-to-one correspondence with the plurality of TAGs. Optionally, the transceiver module is further configured to receive a random access response RAR message from the network device before the processing module determines the first TA or the first TAG based on the first signal. The RAR message includes an initial TA value corresponding to the first TAG, and the initial TA value corresponding to the first TAG and a TA offset corresponding to the first TAG are used to determine a TA corresponding to the first TAG.

Further, the processing module is further configured to determine, based on a field in the RAR message, a TAG corresponding to an initial TA value in the RAR message. Alternatively, the processing module is further configured to determine, based on an SSB corresponding to the RAR message, a TAG corresponding to an initial TA value in the RAR message.

Further, the SSB corresponding to the RAR message is associated with one TAG, and the processing module is further configured to determine that the TAG associated with the SSB is the TAG corresponding to the initial TA value in the RAR message. In a possible design solution, the uplink signal includes one or more of the following: an SRS, a PUSCH, or a PUCCH. Optionally, the transceiver module may alternatively include a sending module and a receiving module. The sending module is configured to implement a sending function of the apparatus according to the sixth aspect, and the receiving module is configured to implement a receiving function of the apparatus according to the seventh aspect.

Optionally, the apparatus according to the seventh aspect may further include a storage module, and the storage module stores a program or instructions. When the processing module executes the program or the instructions, the apparatus may be enabled to perform the method according to the third aspect.

It should be noted that the apparatus according to the seventh aspect may be a terminal, may be a chip (system) or another part or component that may be disposed in the terminal, or may be an apparatus including the terminal. This is not limited in this application.

In addition, for technical effects of the apparatus according to the seventh aspect, refer to the technical effects of the method according to the first aspect. Details are not described herein again. According to an eighth aspect, a communication apparatus is provided. The apparatus includes modules configured to perform the method according to the fourth aspect, for example, a sending module and a receiving module. The sending module is configured to send configuration information to a terminal. The receiving module is configured to receive an uplink signal from the terminal. The configuration information includes one or more of the following: a plurality of TAGs corresponding to one cell of a network device or a plurality of TA offsets corresponding to one cell of the network device.

In a possible design solution, the sending module is further configured to send first information to the terminal before the receiving module receives the uplink signal from the terminal. The first information indicates a first TA or a first TAG corresponding to the uplink signal, the first TAG is one of the plurality of TAGs, and the first TA is one TA corresponding to one of the plurality of TA offsets.

Optionally, the first information is carried in one or more of the following: an RRC message, a MAC-CE message, a DCI message, a spatial relationship, a TCI state, or QCL information.

In another possible design solution, the sending module is further configured to send second information to the terminal before the receiving module receives the uplink signal from the terminal. The second information indicates a first signal, the first signal is an SSB, a spatial relationship reference signal, or a path loss reference signal corresponding to the uplink signal, the first signal is used to determine a first TA or a first TAG corresponding to the uplink signal, the first TAG is one of the plurality of TAGs, and the first TA is one TA corresponding to one of the plurality of TA offsets.

Optionally, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, the configuration information further includes an association relationship between the first signal and the first TA or the first TAG.

In a possible design solution, the sending module is further configured to send a RAR message to the terminal before the receiving module receives the uplink signal from the terminal. The RAR message includes an initial TA value corresponding to the first TAG.

Optionally, a field in the RAR message is used to determine a TAG corresponding to an initial TA value in the RAR message; or an SSB corresponding to the RAR message is used to determine a TAG corresponding to an initial TA value in the RAR message.

Further, the SSB corresponding to the RAR message is associated with one TAG, and the TAG associated with the SSB is the TAG corresponding to the initial TA value in the RAR message. In a possible design solution, the uplink signal includes one or more of the following: an SRS, a PUSCH, or a PUCCH.

In a possible design solution, each of the plurality of TA offsets corresponds to at least a part of the plurality of TAGs.

Optionally, the plurality of TA offsets are in one-to-one correspondence with the plurality of TAGs. Optionally, the sending module and the receiving module may be integrated into one module, for example, a transceiver module. The transceiver module is configured to implement a sending function and a receiving function of the apparatus according to the eighth aspect.

Optionally, the apparatus according to the eighth aspect may further include a processing module. The processing module is configured to implement a processing function of the apparatus.

Optionally, the apparatus according to the eighth aspect may further include a storage module, and the storage module stores a program or instructions. When the processing module executes the program or the instructions, the apparatus may be enabled to perform the method according to the fourth aspect.

It should be noted that the apparatus according to the eighth aspect may be a network device, may be a chip (system) or another part or component that may be disposed in the network device, or may be an apparatus including the network device. This is not limited in this application.

In addition, for technical effects of the apparatus according to the eighth aspect, refer to the technical effects of the method according to the first aspect. Details are not described herein again. According to a ninth aspect, a communication apparatus is provided. The apparatus includes a processor. The processor is configured to perform the method according to any one of the first aspect to the fourth aspect.

In a possible design solution, the apparatus according to the ninth aspect may further include a transceiver. The transceiver may be a transceiver circuit or an interface circuit. The transceiver may be used by the apparatus to communicate with another apparatus.

In a possible design solution, the apparatus according to the ninth aspect may further include a memory. The memory and the processor may be integrated together, or may be disposed separately. The memory may be configured to store a computer program and/or data related to the method according to any one of the first aspect to the fifth aspect.

In this application, the apparatus according to the ninth aspect may be the terminal according to the first aspect, the second aspect, or the third aspect, may be the network device according to the fourth aspect, may be a chip (system) or another part or component that may be disposed in the terminal or the network device, or may be an apparatus including the terminal or the network device.

In addition, for technical effects of the apparatus according to the ninth aspect, refer to the technical effects of the method according to any one of the first aspect to the fourth aspect. Details are not described herein again.

According to a tenth aspect, a communication apparatus is provided. The apparatus includes a processor and a memory. The memory is configured to store computer instructions, and when the processor executes the instructions, the apparatus is enabled to perform the method according to any one of the first aspect to the fourth aspect.

In a possible design solution, the apparatus according to the tenth aspect may further include a transceiver. The transceiver may be a transceiver circuit or an interface circuit. The transceiver may be used by the apparatus to communicate with another apparatus.

In this application, the apparatus according to the tenth aspect may be the terminal according to the first aspect, the second aspect, or the third aspect, may be the network device according to the fourth aspect, may be a chip (system) or another part or component that may be disposed in the terminal or the network device, or may be an apparatus including the terminal or the network device.

In addition, for technical effects of the apparatus according to the tenth aspect, refer to the technical effects of the method according to any one of the first aspect to the fourth aspect. Details are not described herein again.

According to an eleventh aspect, a communication apparatus is provided. The apparatus includes a logic circuit and an input/output interface. The input/output interface is configured to receive code instructions and transmit the code instructions to the logic circuit. The logic circuit is configured to run the code instructions to perform the method according to any one of the first aspect to the fourth aspect.

In a possible design solution, the apparatus according to the eleventh aspect may further include a memory. The memory and the processor may be integrated together, or may be disposed separately. The memory may be configured to store a computer program and/or data related to the method according to any one of the first aspect to the fourth aspect.

In this application, the apparatus according to the eleventh aspect may be the terminal according to the first aspect, the second aspect, or the third aspect, may be the network device according to the fourth aspect, may be a chip (system) or another part or component that may be disposed in the terminal or the network device, or may be an apparatus including the terminal or the network device.

In addition, for technical effects of the apparatus according to the eleventh aspect, refer to the technical effects of the method according to any one of the first aspect to the fourth aspect. Details are not described herein again.

According to a twelfth aspect, a communication apparatus is provided. The apparatus includes a processor and a transceiver. The transceiver is configured to exchange information between the communication apparatus and another apparatus, and the processor executes program instructions to perform the method according to any one of the first aspect to the fourth aspect.

In a possible design solution, the apparatus according to the twelfth aspect may further include a memory. The memory and the processor may be integrated together, or may be disposed separately. The memory may be configured to store a computer program and/or data related to the method according to any one of the first aspect to the fourth aspect.

In this application, the apparatus according to the twelfth aspect may be the terminal according to the first aspect, the second aspect, or the third aspect, may be the network device according to the fourth aspect, may be a chip (system) or another part or component that may be disposed in the terminal or the network device, or may be an apparatus including the terminal or the network device.

In addition, for technical effects of the apparatus according to the twelfth aspect, refer to the technical effects of the method according to any one of the first aspect to the fourth aspect. Details are not described herein again.

According to a thirteenth aspect, a communication system is provided. The communication system includes a terminal and a network device. The terminal is configured to perform the method according to the first aspect, the second aspect, or the third aspect. The network device is configured to perform the method according to the fourth aspect.

According to a fourteenth aspect, a computer-readable storage medium is provided, including a computer program or instructions. When the computer program or the instructions are run on a computer, the method according to any one of the first aspect to the fourth aspect is performed. According to a fifteenth aspect, a computer program product is provided, including a computer program or instructions. When the computer program or the instructions are run on a computer, the method according to any one of the first aspect to the fifth aspect is performed.

### BRIEF DESCRIPTION OF DRAWINGS

FIG. 1 is a schematic diagram of a time domain location relationship between a TA and an uplink slot;
FIG. 2 is a schematic diagram 1 of a location relationship between UE and a cell;
FIG. 3 is a schematic diagram 2 of a location relationship between UE and a cell;
FIG. 4 is a schematic diagram 1 of an architecture of a communication system according to an embodiment of this application;
FIG. 5 is a schematic diagram 2 of an architecture of a communication system according to an embodiment of this application;
FIG. 6 is a schematic flowchart 1 of a communication method according to an embodiment of this application;
FIG. 7 is a schematic diagram of a correspondence between a TA offset and a TAG in a communication method according to an embodiment of this application;
FIG. 8 is a schematic flowchart 2 of a communication method according to an embodiment of this application;
FIG. 9 is a schematic diagram 1 of a structure of a communication apparatus according to an embodiment of this application;
FIG. 10 is a schematic diagram 2 of a structure of a communication apparatus according to an embodiment of this application; and
FIG. 11 is a schematic diagram 3 of a structure of a communication apparatus according to an embodiment of this application.

### DESCRIPTION OF EMBODIMENTS

The following describes technical terms in embodiments of this application.

### 1. Beam

In a protocol, the beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by using a transmission configuration indication state (TCI state, Transmission Configuration Indication state) parameter or a spatial relationship (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI state (a DL TCI state or a UL TCI state), a spatial relationship, or the like. The foregoing terms are also equivalent to each other. Alternatively, the beam may be replaced with another term for representing the beam. This is not limited in this application.

A beam used to send a signal may be referred to as a transmission beam (transmission beam, Tx beam), for example, an uplink transmission beam or a downlink transmission beam, or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). The downlink transmission beam may be indicated by using the TCI state.

A beam used to receive a signal may be referred to as a reception beam (reception beam, Rx beam), for example, an uplink reception beam or a downlink reception beam, or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). The transmission beam may be indicated by using the spatial relationship, the uplink TCI state, or a sounding reference signal (Sounding Reference Signal, SRS) resource (indicating that a transmission beam of an SRS is used). The uplink transmission beam may alternatively be replaced with the SRS resource.

The transmission beam may alternatively be distribution of signal strength formed in different directions in space after a signal is transmitted through an antenna, and the reception beam may alternatively be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam of the terminal by using a transmission configuration number (transmission configuration indication, TCI) field in downlink control information (downlink control information, DCI).

Optionally, a plurality of beams having same or similar communication features are considered as one beam. One beam may include one or more antenna ports, configured to transmit a data channel, a control channel, a sounding signal, and the like. The one or more antenna ports forming the beam may also be considered as one antenna port set. During beam measurement, each beam corresponds to one resource. Therefore, an index of the resource may uniquely identify the beam corresponding to the resource.

The network device may generate different beams that point to different transmission directions. During downlink data transmission, when sending data to the terminal device by using a specific beam, the network device needs to notify the terminal device of information about a transmission beam used by the network device. In this way, the terminal device can receive, by using a reception beam corresponding to the transmission beam, the data sent by the network device.

### 2. Resource

During beam measurement, an index of the resource may uniquely identify a beam corresponding to the resource. The resource may be an uplink signal resource, or may be a downlink signal resource. An uplink signal includes but is not limited to an SRS, a physical uplink control channel (physical uplink control channel, PUCCH), a physical uplink shared channel (physical uplink shared channel, PUSCH), and the like. A downlink signal includes but is not limited to a channel state information reference signal (channel state information reference signal, CSI-RS), a tracking reference signal (tracking reference signal, TRS), a physical downlink control channel (physical downlink control channel, PDCCH), and a PDSCH.

The resource is configured by using a radio resource control (radio resource control, RRC) message. In a configuration structure, one resource is one data structure, and includes a related parameter of an uplink signal/a downlink signal corresponding to the resource, for example, a type of the uplink/downlink signal, a resource element that carries the uplink/downlink signal, sending time and a sending periodicity of the uplink/downlink signal, and a quantity of ports used to send the uplink/downlink signal. A resource of each uplink/downlink signal has a unique index, to identify the resource of the downlink signal. It may be understood that the index of the resource may also be referred to as an identifier of the resource. This is not limited in embodiments of this application.

### 3. TA and timing advance group (Timing advance group, TAG)

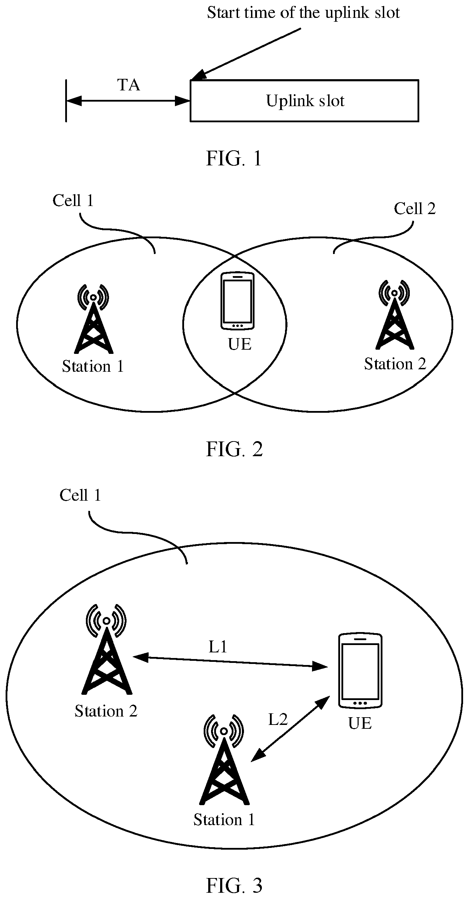

Refer to FIG. 1. During uplink transmission, it takes specific transmission time for a signal to arrive at a station of a network device from a terminal. To implement uplink synchronization, to be specific, to enable a time point at which an uplink signal arrives at the station to be exactly start time of an uplink slot (slot), the terminal needs to send the uplink signal specific time earlier than the start time of the uplink slot. A timing advance needs to be exactly equal to transmission time of the uplink signal, and the timing advance is the TA. For terminals in a same cell, each terminal needs to send, based on a TA of the terminal, an uplink signal to a same station corresponding to the cell, to ensure that uplink signals of a plurality of terminals can arrive at the station at the start time of the uplink slot, that is, to ensure that all the terminals implement uplink synchronization. In this way, the station can successfully receive the uplink signal of each terminal.

If cells in which the terminals are located are different, TAs used by the terminals are also different. Therefore, each corresponding TA may be determined based on the TAG. The TAG is a configuration information element, and includes a TA-related parameter. For a terminal in a cell, a network side may configure one TAG of the cell for the terminal, and the TAG corresponds to one TA. In this way, the terminal may determine the corresponding TA based on the TAG, and perform uplink transmission with a station in the cell, to implement uplink synchronization. For example, as shown in FIG. 2, UE 1 is located in both a cell 1 and a cell 2, and the network side may configure, for the UE 1, TAG 1 {TA 1} corresponding to the cell 1 and TAG 2 {TA 2} corresponding to the cell 2. In this way, the UE 1 may send, by using TAG 1 {TA 1}, an uplink signal to a station 1 corresponding to the cell 1, to implement uplink synchronization with the station 1. Similarly, the UE 1 may also send, by using TAG 2 {TA 2}, an uplink signal to a station 2 corresponding to the cell 2, to implement uplink synchronization with the station 2. TAGs configured for different terminals in a same cell are the same, but TA parameters corresponding to the TAG are different. In other words, TA indexes are the same, but TA values corresponding to the same TA index are different. For example, as shown in FIG. 2, both the UE 1 and UE 2 are in the cell 1, and the network side may still configure, for the UE 2, TAG 1 {TA 1} corresponding to the cell 1. In this case, TA indexes of the UE 1 and the UE 2 are the same (where both indexes are 1), but a TA value corresponding to the TA index of the UE 1 is different from a TA value corresponding to the TA index of the UE 2, in other words, a TA value corresponding to the TAG 1 of the UE 1 is different from a TA value corresponding to the TAG 1 of the UE 2.

For one terminal, the network side may configure, for the terminal, one TAG and one TA offset (offset) that correspond to a cell in which the terminal is located. The TA offset is applicable to all terminals in the cell, in other words, TA offsets of all the terminals in the cell are the same. On this basis, the network side may configure, for the terminal, one initial TA value corresponding to the TAG. The initial TA value corresponds to a distance of the terminal, and the distance is a distance between the terminal and a station corresponding to the cell. In other words, the initial TA value configured by the network side for the terminal varies with the distance between the terminal and the station. In this way, the terminal may determine, based on the initial TA value and the TA offset that correspond to the TAG, one TA value corresponding to the TAG. For example, the TA value = the TA offset + the initial TA value. Then, as the terminal moves, the distance between the terminal and the station also changes accordingly, and the network side needs to correspondingly update the TA value based on the change of the distance, to maintain uplink synchronization.

It should be noted that, unless otherwise specified, the TA mentioned in this application may indicate a TA index. For example, the TA 1 indicates that a TA index is 1. Alternatively, the TA mentioned in this application may indicate a TA value corresponding to a TA index. For another example, the TA 1 indicates a TA value corresponding to a TA index 1. Understandings of the two cases may be replaced with each other. However, when a plurality of TAs mentioned in this application are understood as TA values, the plurality of TAs do not indicate a plurality of TA values corresponding to one TA index, but indicate TA values respectively corresponding to a plurality of TA indexes. In addition, in this application, one TA index usually corresponds only to one TA value. Unless otherwise specified, the TAG mentioned in this application usually indicates an index or a TAG ID of the TAG. For example, the TAG 1 indicates a TAG whose index is 1. In addition, for ease of description, concepts of both the "network device" and the "station" are mentioned in this application. The network device may be understood as a general term of all devices (including stations) on the network side. For example, a plurality of stations may be collectively referred to as a network device. The station is one transmission node having a specific physical location. In other words, the network device conceptually includes the station. Unless otherwise specified, the signal mentioned in this application, for example, the uplink signal, the downlink signal, or a first signal, may be a specific signal, for example, the SRS or the CSI-RS, or may be a specific channel, for example, the PUSCH or the PUCCH. In addition, the signal mentioned in this application may also be understood as a resource. For example, the spatial relationship reference signal may be understood as a spatial relationship reference signal resource, a beam reference signal may be understood as a beam reference signal resource, and a path loss reference signal may be understood as a path loss reference signal resource. The signal and the resource may be replaced with each other.

It may be understood that if one cell of the network device corresponds to one station, the terminal performs uplink transmission with the station by using one TAG and one TA that correspond to the cell, to implement uplink synchronization. However, if one cell of the network device corresponds to a plurality of stations, because distances between the terminal and the plurality of stations are usually unequal, when the terminal separately performs uplink transmission with the plurality of stations by using one TAG and one TA that correspond to the cell, it is difficult for the terminal to synchronize with the plurality of stations. Consequently, a performance loss of uplink transmission is caused. For example, as shown in FIG. 3, a cell 1 includes a station 1 and a station 2. A distance between UE 1 and the station 1 and a distance between the UE 1 and the station 2 are respectively L1 and L2. L1 is less than L2. A network side configures, for the UE 1, TAG 1 {TA 1} corresponding to the cell 1. In this case, if the UE 1 can implement uplink synchronization by performing uplink transmission with the station 1 by using TAG 1 {TA 1}, the UE 1 cannot implement uplink synchronization by performing uplink transmission with the station 2 by using TAG 1 {TA 1}. A time point at which an uplink signal arrives at the station 2 is earlier than start time of an uplink slot of the station 2. Consequently, a performance loss of uplink transmission between the UE 1 and the station 2 is caused. Similarly, if the UE 1 can implement uplink synchronization by performing uplink transmission with the station 2 by using TAG 1 {TA 1}, the UE 1 cannot implement uplink synchronization by performing uplink transmission with the station 1 by using TAG 1 {TA 1}. A time point at which an uplink signal arrives at the station 1 is later than start time of an uplink slot of the station 1. Consequently, a performance loss of uplink transmission between the UE 1 and the station 1 is caused.

For the foregoing technical problem, embodiments of this application provide the following technical solutions.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4^{th} generation (4^{th} generation, 4G) mobile communication system such as a long term evolution LTE system, a 5G mobile communication system such as a new radio (new radio, NR) system, and a future communication system such as a 6^{th} generation (6^{th} generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferable or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. The terms "of (of)", "corresponding (corresponding, relevant)", and "corresponding (corresponding)" may be interchangeably used sometimes. It should be noted that expressed meanings are consistent when differences are not emphasized. Unless otherwise specified, "/" indicates "or".

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

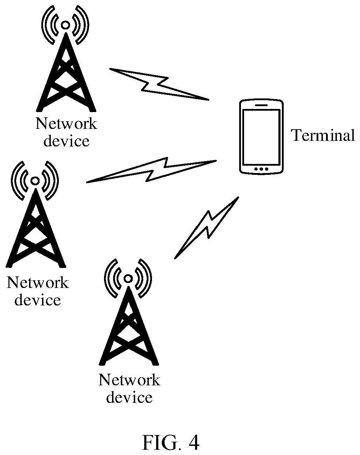

For ease of understanding embodiments of this application, a communication system shown in FIG. 4 is first used as an example to describe in detail a communication system to which embodiments of this application are applicable. For example, FIG. 4 is a schematic diagram of an architecture of a communication system to which a communication method according to an embodiment of this application is applicable.

As shown in FIG. 4, the communication system includes a terminal and a network device.

The terminal is a terminal that accesses the communication system and that has a wireless transceiver function, or the terminal is a chip or a chip system that may be disposed in the terminal. The terminal may also be referred to as user equipment (user equipment, UE), an access terminal, a subscriber unit (subscriber unit), a subscriber station, or a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a pad (Pad), a wireless data card, a personal digital assistant (personal digital assistant, PDA), a wireless modem (modem), a handset (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, an RSU having a terminal function, or the like. The terminal in this application may alternatively be an in-vehicle module, an in-vehicle assembly, an in-vehicle component, an in-vehicle chip, or an in-vehicle unit that is built in a vehicle as one or more components or units.

There may be a plurality of network devices, and the plurality of network devices are devices that are located on a network side of the communication system and that have a wireless transceiver function, or the plurality of network devices are chips or chip systems that may be disposed in the devices. The network device may include: a gNB in a 5G system such as an NR system, one or a group of (including a plurality of antenna panels) antenna panels of a base station in the 5G system, a network node forming a gNB, a transmission point (transmission and reception point, TRP, or transmission point, TP), or a transmission measurement function (transmission measurement function, TMF), for example, a baseband unit (BBU), a central unit (central unit, CU), a distributed unit (distributed unit, DU), or a roadside unit (roadside unit, RSU) having a base station function, a wired access gateway, or the like. In addition, in systems using different radio access technologies, names of the network device may vary, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), or an eNB or an eNodeB (evolved NodeB) in long term evolution (long term evolution, LTE). Alternatively, the network device may be a radio controller in a cloud radio access network (cloud radio access network, CRAN) scenario. In addition, the network device may also include an access point (access point, AP) in a wireless fidelity (wireless fidelity, Wi-Fi) system, a wireless relay node, a wireless backhaul node, and a macro base station, a micro base station (also referred to as a small cell), a relay station, an access point, a wearable device, an in-vehicle device, and the like that are in various forms.

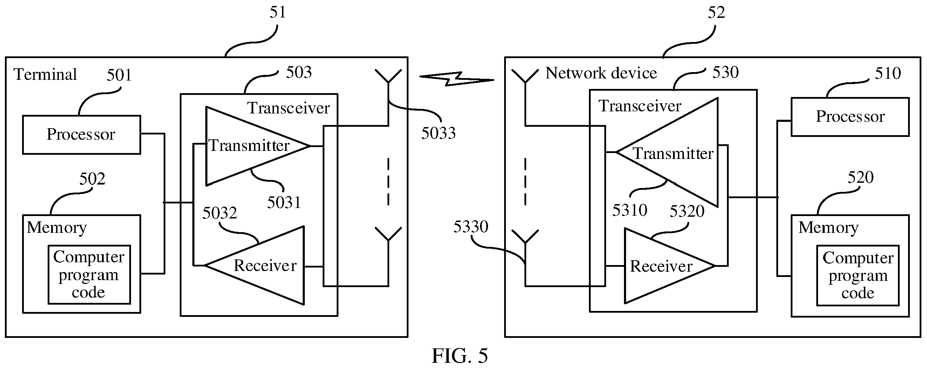

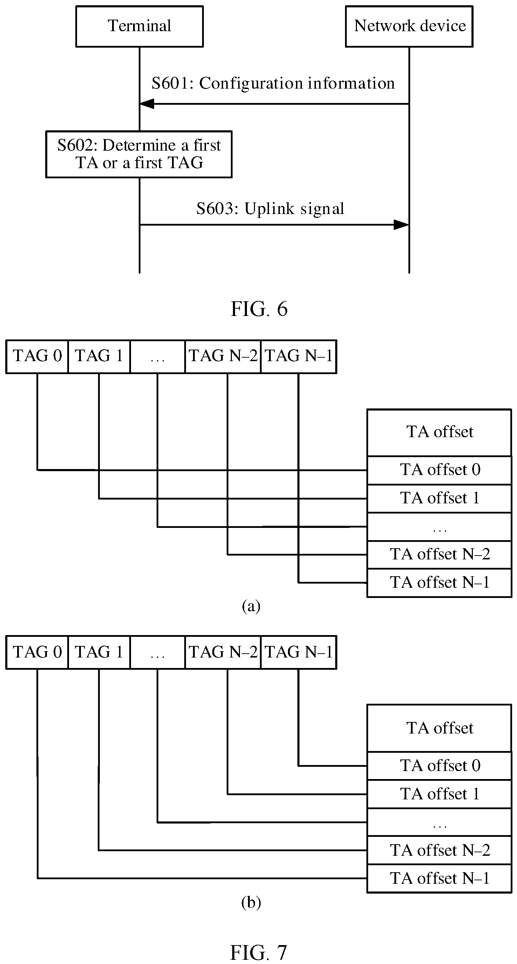

Communication between a network device and a terminal in a communication system shown in FIG. 5 may alternatively be represented in another form. As shown in FIG. 5, a terminal 51 includes a processor 501, a memory 502, and a transceiver 503. The transceiver 503 includes a transmitter 5031, a receiver 5032, and an antenna 5033. A network device 52 includes a processor 510, a memory 520, and a transceiver 530. The transceiver 530 includes a transmitter 5310, a receiver 5320, and an antenna 5330. The receiver 5032 may be configured to receive a downlink signal through the antenna 5033, and the transmitter 5031 may be configured to send an uplink signal to the network device 52 through the antenna 5033. The transmitter 5310 may be configured to send a downlink signal to the terminal 51 through the antenna 5330, and the receiver 5320 may be configured to receive, through the antenna 5330, an uplink signal sent by the terminal device 51. The following describes in detail a communication method provided in embodiments of this application with reference to FIG. 6 to FIG. 8.

For example, FIG. 6 is a schematic flowchart 1 of a communication method according to an embodiment of this application. The communication method is applicable to communication between any two nodes, for example, the terminal and the network device, in the network architecture shown in FIG. 4. As shown in FIG. 6, the communication method includes S601, S602, and S603.

S601: The network device sends configuration information to the terminal. Correspondingly, the terminal receives the configuration information from the network device.

The configuration information is carried in an RRC message or any other possible message. The configuration information includes one or more of the following: a plurality of TAGs corresponding to one cell of the network device or a plurality of TA offsets corresponding to one cell of the network device. Each of the plurality of TA offsets corresponds to at least a part of the plurality of TAGs. In other words, the TA offset and the TAG may be in one-to-one correspondence, or the TA offset and the TAG may be in one-to-many correspondence.

Specifically, the configuration information may include N TAGs and N TA offsets, the N TAGs and the N TA offsets may be in one-to-one correspondence, and N is an integer greater than 1. In a correspondence manner, the N TAGs may correspond to the N TA offsets in sequence. To be specific, a TA offset whose TA index is the i^{th} largest in the N TA offsets corresponds to a TAG whose index is the i^{th} largest in the N TAGs, or a TA offset whose TA index is the i^{th} smallest in the N TA offsets corresponds to a TAG whose index is the i^{th} smallest in the N TAGs. For example, as shown in (a) in FIG. 7, a TA offset 0 corresponds to a TAG 0, and a TA offset 1 corresponds to a TAG 1. By analogy, a TA offset N-2 corresponds to a TAG N-2, and a TA offset N-1 corresponds to a TAG N-1. In another correspondence manner, the N TAGs may correspond to the N TA offsets in a reverse sequence. To be specific, a TA offset whose TA index is the i^{th} smallest in the N TA offsets corresponds to a TAG whose index is the i^{th} largest in the N TAGs, or a TA offset whose TA index is the i^{th} largest in the N TA offsets corresponds to a TAG whose index is the i^{th} smallest in the N TAGs. For example, as shown in (b) in FIG. 7, a TA offset 0 corresponds to a TAG N-1, and a TA offset 1 corresponds to a TAG N-2. By analogy, a TA offset N-2 corresponds to a TAG 1, and a TA offset N-1 corresponds to a TAG 0. In addition, an index of a TAG or a TA offset may be numbered from 0, or may be numbered from any other number, for example, from 1. This is not limited herein. In still another correspondence manner, the N TAGs may correspond to N TAs in respective configuration sequences. For example, an i^{th} TAG corresponds to an i^{th} TA offset, or a TAG whose index is the i^{th} smallest corresponds to the i^{th} TA offset. This is not limited herein. Alternatively, the configuration information may include M TAGs and N TA offsets, an i^{th} TA offset in the N TA offsets corresponds to m TAGs in the M TAGs, N and M are integers greater than 1, i is an integer of any value from 1 to N, and m is a positive integer. For example, a TA offset 0 corresponds to {TAG 0, TAG 1, TAG 2}, a TA offset 1 corresponds to {TAG 1, TAG 2}, a TA offset 2 corresponds to {TAG 2, TAG 3}, and the like. For another example, a TA offset 0 corresponds to {TAG 0}, a TA offset 1 corresponds to {TAG 1, TAG 2}, a TA offset 2 corresponds to {TAG 2, TAG 3}, and the like.

It should be noted that, in the foregoing configuration information, the TAG may be a global index (or the index of the TAG is a global index); or the TAG may be a local index (or the index of the TAG is a local index). The global index indicates that the TAG is a TAG in all TAGs corresponding to all cells. All the cells may be all cells configured by the network device for the terminal. The local index indicates that the TAG is a TAG in a plurality of TAGs corresponding to a specific cell. The specific cell may be a cell that sends the configuration information. In addition, the correspondence between the TAG and the TA offset is not limited to the correspondences described above. Alternatively, one TAG may correspond to a plurality of TA offsets. This is not limited in this application.

Optionally, the terminal may send a random access request (random access request, RAR) message to the network device. The random access request message may request an initial TA value corresponding to a specific TAG. The network device may send a random access response (random access response, RAR) message to the terminal. The random access response message may include the initial TA value of the specific TAG. Correspondingly, the terminal may receive the RAR message from the network device.

The RAR message may include related information of a TAG in the plurality of TAGs, for example, an index of the TAG and one initial TA value corresponding to the TAG. A first TAG is used as an example. The RAR message includes the first TAG, for example, an index of the first TAG, and an initial TA value corresponding to the first TAG, for example, a first initial TA value. An example of a frame format of the RAR message is shown in the following Table 1.

**Table 1**

| 1 bit | 1 bit | 1 bit | 1 bit | 1 bit | 1 bit | 1 bit | 1 bit |
|---|---|---|---|---|---|---|---|
| R | Timing advance command | | | | | | |
| Timing advance command | | | | | UL Grant | | |
| UL Grant | | | | | | | |
| UL Grant | | | | | | | |
| UL Grant | | | | | | | |
| Temporary C-RNTI | | | | | | | |
| Temporary C-RNTI | | | | | | | |

The first initial TA value may be indicated by some fields in the RAR message, for example, a timing advance command (timing advance command) field in Table 1. The timing advance command field has a plurality of bits (bits), for example, 12 bits, so that the plurality of bits indicate various values of the first initial TA value. The first TAG may be indicated by some other fields in the RAR message, for example, a reserved field (an R field) in Table 1, so that the terminal can determine, based on the reserved field in the RAR message, that the initial TA value in the RAR message is the first initial TA value corresponding to the first TAG. The reserved field may be one bit, so that a value 0 or 1 of the bit correspondingly indicates two TAGs. For example, the value 0 of the bit indicates the first TAG, and the value 1 of the bit indicates another TAG, for example, a second TAG. Alternatively, the value 1 of the bit indicates the first TAG, and the value 0 of the bit indicates a second TAG. If more than two TAGs need to be indicated, the reserved field and another field may be used for joint indication. For example, redundant bits in the timing advance command field may be used, and these redundant bits and the reserved field jointly indicate more than two TAGs. The first TAG may alternatively be indicated by any other possible field in the RAR message. This is not limited in this application. For example, the first TAG may alternatively be indicated by using some or all bits of an existing field in the random access response message. Specifically, some or all bits of a temporary C-RNTI field in the random access message may be used as the foregoing field, to be specific, may indicate whether a TA included in the random access response message is a TA of a first cell. Optionally, the some or all bits of the currently existing field in the random access response message can indicate the first TAG only when a first condition is met. The first condition at least includes: A random access preamble corresponding to the random access response message is a contention-free random access preamble. In the RAR message, the first TAG may be a local index (or the index of the first TAG is a local index); or the first TAG may be a global index (or the index of the first TAG is a global index). The global index indicates that the first TAG is a TAG in all TAGs corresponding to all cells. All the cells may be all serving cells configured by the network device for the terminal. The local index indicates that the first TAG is a TAG in a plurality of TAGs corresponding to a specific cell. The specific cell may be a cell that sends the RAR message. It should be noted that the first row of the foregoing table only indicates a correspondence manner of bits, and is not content of the RAR message. In other words, the content of the RAR message starts from the second row of the foregoing table. Alternatively, the RAR message may include only the timing advance command field, and does not include a TAG indication field. In this case, a TAG corresponding to an initial TA value indicated by the timing advance command field in the RAR message may be determined by using an SSB corresponding to the RAR message.

In an implementation, each SSB in one cell may be associated with one TAG, or SSBs in one cell may be classified into a plurality of groups, and each SSB group is associated with one TAG. The SSB group may be indicated by the network device to the terminal. For example, the SSB group is sent to the terminal by using an RRC configuration message. An association relationship between the SSB and the TAG may be indicated by the network device to the terminal. For example, the association relationship between the SSB and the TAG is sent to the terminal by using the RRC configuration message. An association relationship between the SSB group and the TAG may be indicated by the network device to the terminal. For example, the association relationship between an SB group and the TAG is sent to the terminal by using the RRC configuration message. Alternatively, the association relationship may be a rule specified in a protocol. For example, an i^{th} SSB group is associated with an i^{th} TAG, or the i^{th} SSB group is associated with a TAG whose index is the i^{th} smallest or the i^{th} largest. The terminal may determine, based on the SSB corresponding to the RAR message, the TAG corresponding to the initial TA value indicated in the RAR message. For example, the terminal may determine the SSB corresponding to the RAR message, and then determine a TAG associated with the SSB, or determine a TAG associated with an SSB group to which the SSB belongs. The TAG is the TAG corresponding to the initial TA value indicated in the RAR message. The SSB corresponding to the RAR message may be specifically an SSB associated with the random access request message corresponding to the RAR message. Each random access request message may be associated with one SSB. The SSB associated with the random access request message may be indicated by using DCI signaling. For example, the network device may send a DCI message to the terminal. The DCI message indicates the terminal to send the random access request message to the network device, and the DCI message includes information about the SSB associated with the random access request message. It can be learned from the foregoing descriptions of the RAR message that, one RAR message may carry one initial TA value corresponding to one TAG. If the network device expects to configure a plurality of initial TA values for the terminal, the network device may send a plurality of RAR messages to the terminal. A sequence of sending, by the network device, the plurality of RAR messages to the terminal and sending, by the network device, the configuration information to the terminal, that is, S601, is not limited. The network device may send the plurality of RAR messages to the terminal before S601, may send the plurality of RAR messages to the terminal after S601, or may send some RAR messages to the terminal before S601, and send the other RAR messages to the terminal after S601. It should be noted that when the network device sends one RAR message to the terminal before S601, because the terminal has not learned of a corresponding TAG by using the configuration information, the terminal cannot understand a meaning of a TAG in the RAR message, namely, a meaning of the reserved field. Therefore, the terminal may consider by default that an initial TA value in the RAR message is a TAG, for example, the first initial TA value corresponding to the first TAG. In other words, regardless of which initial TA value is included in the RAR message by the network device, the terminal considers the initial TA value as the first initial TA value corresponding to the first TAG. In this case, to avoid a configuration error, the network device should be aligned with the terminal. To be specific, the network device should carry the default initial TA value of the terminal in the RAR message. In other words, in this case, the terminal device considers by default that a value of the field indicating the TAG is 0. Alternatively, in this case, the terminal device ignores a value of the field indicating the TAG. In addition, if the network device sends the plurality of RAR messages to the terminal before S601, the terminal may consider, by default and based on a sequence of receiving the plurality of RAR messages, an initial TA value in each RAR message as a corresponding initial TA value. For example, for the 1^{st} received RAR message, the terminal considers by default that an initial TA value in the RAR message is the first initial TA value corresponding to the first TAG, for the 2^{nd} received RAR message, the terminal considers by default that an initial TA value in the RAR message is a second initial TA value corresponding to the second TAG, and so on. In this case, to avoid a configuration error, the network device should sequentially carry the corresponding initial TA values in the RAR messages based on an understanding sequence of the terminal. In addition, before sending the RAR message to the terminal, the network device may further receive the random access request (random access request) message from the terminal.

For the terminal, the terminal may determine, based on one initial TA value corresponding to each TAG and one TA offset corresponding to each TAG, one TA corresponding to each TAG, for example, a value of the TA, in other words, determine values of a plurality of TAs corresponding to one cell of the network device. For example, the terminal may determine, based on the initial TA value corresponding to the first TAG, for example, the first initial TA value, and a TA offset corresponding to the first TAG, for example, a first TA offset, one TA corresponding to the first TAG, for example, a first TA or another TA. For example, assuming that TAG 0 {TA offset 0} and TAG 0 {initial TA value 0} are configured, the terminal determines that TAG 0 {TA value of TA 0} = TAG 0 {TA offset 0 + initial TA value 0}; and assuming that TAG 1 {TA offset 1} and TAG 1 {initial TA value 1} are configured, the terminal determines that TAG 1 {TA value of TA 1} = TAG 1 {TA offset 1 + initial TA value 1}. It should be understood that the configuration information including one initial TA value corresponding to each of the plurality of TAGs is merely an example. Alternatively, the configuration information may not include these initial TA values. In other words, one initial TA value corresponding to each of the plurality of TAGs may be preconfigured locally on the terminal. This is not limited in this application. In addition, for specific principles of the initial TA value and the TA offset, refer to related descriptions in the foregoing "5. TA and TAG". Details are not described again.

It can be learned that the network device configures, for the terminal, the TA offset and the initial TA value that correspond to the TAG, so that the terminal can determine a TA corresponding to each TAG. In this way, even if the network device indicates only a TAG, the terminal can determine a corresponding TA or TAG based on the TAG, so that uplink synchronization is implemented. In addition, for descriptions of determining, by the terminal, the corresponding TA or TAG, refer to related descriptions in the following S602.

S602: The terminal determines the first TA or the first TAG.

The first TA is a TA corresponding to uplink signal transmission, and the first TAG is a TAG corresponding to uplink signal transmission.

S603: The terminal sends a corresponding uplink signal to the network device based on the first TA or the first TAG. Correspondingly, the network device receives the uplink signal from the terminal.

The terminal may determine a corresponding TA value based on the first TA or the first TAG to send the corresponding uplink signal to the network device based on the TA value, so that the network device receives the uplink signal at start time of an uplink slot. In addition, when one TAG, for example, the first TAG, corresponds to a plurality of TAs, a TA used for uplink transmission is one of the plurality of TAs. A specific TA that is in the TAs and that is used for uplink transmission may be determined based on other information corresponding to uplink transmission. The other information includes one or more of the following: a terminal transmission beam, a terminal antenna panel, a beam reference signal, a path loss reference signal, a TA reference signal, a transmission and reception point (transmission and reception point, TRP) index, a CORESET group index, a beam failure detection resource group index, a new beam identification resource group index, or the like. This is not limited in this application.

The following describes specific implementation of S602.

The first TA is one of the plurality of TAs corresponding to one cell of the network device, and the first TAG is one of the plurality of TAGs corresponding to one cell of the network device. The first TA or the first TAG indicates uplink transmission of the terminal. To be specific, the terminal needs to send the corresponding uplink signal to the network device based on the first TA or the first TAG. The uplink signal may include one or more of the following: an SRS, a PUSCH, or a PUCCH. The SRS may be one or more of the following: a codebook (codebook)-type SRS, a non-codebook (non-codebook)-type SRS, a beam management (beam management)-type SRS, an antenna switching (antenna switching)-type SRS, a periodic SRS, a semi-persistent SRS, or an aperiodic SRS. In addition, the SRS may alternatively be a combination of the foregoing plurality of types. For example, the SRS may be both the codebook-type SRS and the periodic SRS, that is, a periodic SRS in a codebook type. For another example, the SRS may be both the non-codebook-type SRS and the semi-persistent SRS, that is, a semi-persistent SRS in a non-codebook type. For still another example, the SRS may be both the beam management-type SRS and the aperiodic SRS, that is, an aperiodic SRS in a beam management type. The terminal may determine the first TA or the first TAG in an explicit indication manner or an implicit indication manner.

### Manner 1: Explicit indication

The explicit indication indicates that the first TA or the first TAG may be determined based on first information, and the first information indicates the first TA or the first TAG corresponding to the uplink signal. For example, the first information indicates the index of the first TAG. In other words, the network device may indicate a currently required TA or TAG by using the first information based on an actual situation, to implement more flexible TA or TAG selection. A selected TA or TAG better matches an uplink transmission distance of the terminal, and uplink transmission is more stable. The first information may be carried in one or more of the following: an RRC message, a medium access control-control element (medium access control-control element, MAC-CE) message, a DCI message, a spatial relationship, a TCI state, a power control parameter set, or QCL information (QCL-info). The following provides specific descriptions with reference to the uplink signal.

### (A) The uplink signal is the SRS, and the first information is carried in one or more of the following: the RRC message, the MAC-CE message, or the DCI message.

The first information is carried in the RRC message. The first information may correspond to an SRS resource set (resource set) in the RRC message. For example, the network device may configure the corresponding first TA or first TAG, that is, configure the first information, for the SRS resource set in the RRC message, to indicate that all SRSs corresponding to the SRS resource set need to be sent by using the first TA or the first TAG indicated by the first information. For example, TA 1 {SRS 1, SRS 2, SRS 3} or TAG 1 {SRS 1, SRS 2, SRS 3} is configured, to indicate that the SRS 1, the SRS 2, and the SRS 3 all need to be sent by using the TA 1 or the TAG 1. Alternatively, the first information may correspond to an SRS resource (resource) in the RRC message. For example, the network device may configure the corresponding first TA or first TAG for the SRS resource in the RRC message, to indicate that an SRS corresponding to the SRS resource needs to be sent by using the first TA or the first TAG indicated by the first information. For example, TA 1 {SRS 1} or TAG 1 {SRS 1} is configured, to indicate that the SRS 1 needs to be sent by using the TA 1 or the TAG 1. In this case, to indicate that a plurality of SRSs are sent by using a same TA or TAG, the network device may configure the same TA or TAG, for example, configure the first TA or the first TAG, for SRS resources of the plurality of SRSs. For example, TAG 1 {SRS 1}, TAG 1 {SRS 2}, and TAG 1 {SRS 3} are configured, to indicate that the SRS 1, the SRS 2, and the SRS 3 all need to be sent by using the TAG 1. Certainly, the network device may alternatively configure different TAs or TAGs for a plurality of SRS resources of the plurality of SRSs respectively. This is not limited herein. It can be learned that the network device may use different configuration granularities to indicate the TA or the TAG corresponding to the SRS. For example, the TA or the TAG corresponding to the SRS may be more conveniently indicated by using a configuration granularity of the SRS resource set, and the TA or the TAG corresponding to the SRS may be more flexibly indicated by using a configuration granularity of the SRS resource. The first information is carried in the MAC-CE message, and the MAC-CE message may be a MAC-CE message (denoted as a MAC-CE message 1) used to activate a spatial relationship of the SRS. In other words, the MAC-CE message 1 may indicate a transmission beam of the SRS. An example of a frame format of the MAC-CE message 1 is shown in the following Table 2.

**Table 2**

| 1 bit | 1 bit | 1 bit | | 1 bit | | 1 bit | | 1 bit | 1 bit | 1 bit |
|---|---|---|---|---|---|---|---|---|---|---|
| A/D | SRS Resource Set's Cell ID | | | | | | | | SRS Resource Set's BWP ID | |
| R1 | R2 | | C | | SUL | | SP SRS Resource Set ID | | | |
| F0 | Resource ID 0 | | | | | | | | | |
| ... | | | | | | | | | | |
| FM-1 | Resource ID M-1 | | | | | | | | | |
| R | Resource Serving Cell ID 0 | | | | | | | | Resource Set's BWP ID 0 | |
| ... | | | | | | | | | | |
| R | Resource Serving Cell ID M-1 | | | | | | | | Resource Set's BWP ID M-1 | |

As shown in Table 2, the first information may be some fields in the MAC-CE message 1, for example, an R1 field and/or an R2 field. In some indication manners, the first TA or the first TAG may be indicated by using one field or a single bit, for example, the R1 field or the R2 field. For example, one of two TAGs of a specific cell is indicated by using the R1 field. Alternatively, one of two TAGs of a specific cell is indicated by using the R2 field. In some other indication manners, the first TA or the first TAG may be indicated by using a plurality of fields or a plurality of bits. For example, two bits formed by the R1 field and the R2 field indicate one TAG, for example, indicate one TAG in TAGs corresponding to a specific cell, or one TAG in all TAGs corresponding to all cells. The specific cell is specifically a cell that sends the MAC-CE message 1, a cell indicated in the MAC-CE message 1, for example, a cell indicated by an SRS Resource Set's Cell ID field, or a cell in which the terminal is located. It should be understood that, in addition to the foregoing MAC-CE message 1, another MAC-CE message may indicate the TA or the TAG. A specific method is the same as the foregoing described method. To be specific, one or more bits indicate one of a plurality of TAGs of a specific cell, or one or more bits indicate one of a plurality of TAGs corresponding to all cells. The specific cell may be a cell that sends the MAC-CE message 1, or may be another cell, for example, a cell indicated in the MAC-CE message 1. It should be noted that the first row of the foregoing table only indicates a correspondence manner of bits, and is not content of the MAC-CE message 1. In other words, the content of the MAC-CE message 1 starts from the second row of the foregoing table.

The first information is carried in the DCI message, for example, may be one DCI field in the DCI message, for example, a first DCI field. In the first DCI field, the first TAG may be a global index, or may be a local index. The global index indicates that the first TAG is a TAG in all TAGs corresponding to all cells. All the cells may be all cells configured by the network device for the terminal. The local index indicates that the first TAG is a TAG in a plurality of TAGs corresponding to a specific cell. The specific cell may be a cell that sends the DCI message, that is, a local cell, or may be another cell, to implement cross-cell scheduling. The another cell may be specifically indicated by using one field in the DCI message, for example, a carrier ID, or any other possible field. This is not limited in this application. In addition, an indication principle of the first DCI field is similar to an indication principle of the MAC-CE message 1, and reference may be made for understanding. Details are not described again.

It should be noted that when the uplink signal is the SRS, that the first information is carried in the RRC message, the MAC-CE message or the DCI message is merely an example, and is not limited. The first information may be further carried in the spatial relationship, the TCI state, the power control parameter set, or the QCL information. For specific implementation, refer to related descriptions in the following "(D)". Details are not described herein.

### (B) The uplink signal is the PUCCH, and the first information is carried in one or more of the following: the RRC message or the MAC-CE message.

The first information is carried in the RRC message, and the first information may correspond to one group of PUCCHs in the RRC message, or may correspond to a PUCCH set. For example, the network device may configure the corresponding first TA or first TAG, namely, the first information, for the group of PUCCHs in the RRC message, to indicate that the group of PUCCHs needs to be sent by using the first TA or the first TAG indicated by the first information. For example, TA 1 {PUCCH 1, PUCCH 2, PUCCH 3} or TAG 1 {PUCCH 1, PUCCH 2, PUCCH 3} is configured, to indicate that the PUCCH 1, the PUCCH 2, and the PUCCH 3 all need to be sent by using the TA 1 or the TAG 1. Alternatively, the first information may correspond to a single PUCCH in the RRC message. For example, the network device may configure the corresponding first TA or first TAG for each PUCCH in the RRC message, to indicate that the PUCCH needs to be sent by using the first TA or the first TAG indicated by the first information. For example, TA 1 {PUCCH 1} or TAG 1 {PUCCH 1} is configured, to indicate that the PUCCH 1 needs to be sent by using the TA 1 or the TAG 1. In this case, to indicate that a plurality of PUCCHs are sent by using a same TA or TAG, the network device may configure the same TA or TAG, for example, configure the first TA or the first TAG, for the plurality of PUCCHs. For example, TAG 1 {PUCCH 1}, TAG 1 {PUCCH 2}, and TAG 1 {PUCCH 3} are configured, to indicate that the PUCCH 1, the PUCCH 2, and the PUCCH 3 all need to be sent by using the TAG 1. Certainly, the network device may alternatively configure different TAs or TAGs for the plurality of PUCCHs respectively. This is not limited herein. It can be learned that the network device may use different configuration granularities to indicate the TA or the TAG corresponding to the PUCCH. For example, the TA or the TAG corresponding to the PUCCH may be more conveniently indicated by using a configuration granularity of the PUCCH set, and the TA or the TAG corresponding to the PUCCH may be more flexibly indicated by using a configuration granularity of the single PUCCH.

The first information is carried in the MAC-CE message, and the MAC-CE message may be a MAC-CE message (denoted as a MAC-CE message 2) used to activate a spatial relationship of the PUCCH. In other words, the MAC-CE message 2 may indicate a transmission beam of the PUCCH. An example of a frame format of the MAC-CE message 2 is shown in the following Table 3.

**Table 3**

| 1 bit | 1 bit | 1 bit | 1 bit | 1 bit | 1 bit | 1 bit | 1 bit |
|---|---|---|---|---|---|---|---|
| R3 | Serving Cell ID | | | | | BWP ID | |
| R4 | PUCCH Resource ID | | | | | | |
| S7 | S6 | S5 | S4 | S3 | S2 | S1 | S0 |

As shown in Table 3, the first information may be some fields in the MAC-CE message 2, for example, an R3 field and/or an R4 field. In some indication manners, the first TA or the first TAG may be indicated by using a single field or a single bit, for example, the R3 field or the R4 field. For example, one of two TAGs of a specific cell is indicated by using the R3 field. Alternatively, one of two TAGs of a specific cell is indicated by using the R4 field. In some other indication manners, the first TA or the first TAG may be indicated by using a plurality of fields or a plurality of bits. For example, two bits formed by the R3 field and the R4 field indicate one TAG, for example, indicate one TAG in TAGs corresponding to a specific cell, or indicate one TAG in all TAGs corresponding to all cells. The specific cell is specifically a cell that sends the MAC-CE message 2, a cell indicated in the MAC-CE message 2, for example, a cell indicated by a Serving Cell ID field, or a cell in which the terminal is located. It should be understood that, in addition to the foregoing MAC-CE message 2, another MAC-CE message may indicate the TA or the TAG. A specific method is the same as the foregoing described method. To be specific, one or more bits indicate one of a plurality of TAGs of a specific cell, or one or more bits indicate one of a plurality of TAGs corresponding to all cells. The specific cell may be a cell that sends the MAC-CE message 2, or may be another cell, for example, a cell indicated in the MAC-CE message 2. It should be noted that the first row of the foregoing table only indicates a correspondence manner of bits, and is not content of the MAC-CE message 2. In other words, the content of the MAC-CE message 2 starts from the second row of the foregoing table.

It should be noted that when the uplink signal is the PUCCH, that the first information is carried in the RRC message or the MAC-CE message is merely an example, and does not constitute a limitation. The first information may be further carried in the DCI message, the spatial relationship, the TCI state, the power control parameter set, or the QCL information. If the first information is carried in the DCI message, the PUCCH is a PUCCH corresponding to a PDSCH indicated by the DCI message or a PUCCH corresponding to downlink measurement. In other words, when the PDSCH is scheduled by using the DCI message, the DCI message indicates a TA or a TAG of a PUCCH for feeding back a HARQ result corresponding to the PDSCH. Alternatively, when the downlink measurement is triggered by using the DCI message, the DCI message indicates a TA or a TAG of a PUCCH for feeding back a measurement result corresponding to the downlink measurement.

For specific implementation of carrying the first information in the spatial relationship, the TCI state, or the QCL information, refer to related descriptions in the following "(D)". Details are not described herein.

### (C) The uplink signal is the PUSCH, and the first information is carried in the DCI message.

The DCI message may be a DCI message for scheduling the PUSCH. The first information may be a DCI field in the DCI message, for example, a second DCI field. The second DCI field may be one or more bits, and the one or more bits indicate the first TA or the first TAG. Similar to a first DCI field, in the second DCI field, the first TAG may be a global index, or may be a local index. The global index indicates that the first TAG is a TAG in all TAGs corresponding to all cells. All the cells may be all cells configured by the network device for the terminal. The local index indicates that the first TAG is a TAG in a plurality of TAGs corresponding to a specific cell. The specific cell may be a cell that sends the DCI message, that is, a local cell, or may be another cell, to implement cross-cell scheduling. The another cell may be specifically indicated by using one field in the DCI message, for example, a carrier ID, or any other possible field. This is not limited in this application. In addition, an indication principle of the second DCI field is similar to an indication principle of the MAC-CE message 1 or the MAC-CE message 2, and reference may be made for understanding. Details are not described again.

It should be noted that when the uplink signal is the PUSCH, that the first information is carried in the DCI message is merely an example, and does not constitute a limitation. The first information may be further carried in the RRC message, the MAC-CE message, the spatial relationship, the TCI state, or the QCL information. For specific implementation of carrying the first information in the spatial relationship, the TCI state, or the QCL information, refer to related descriptions in the following "(D)". Details are not described herein.

### (D) The uplink signal includes one or more of the following: the SRS, the PUSCH, or the PUCCH.

The first information is carried in the spatial relationship, the TCI state, the power control parameter set, or the QCL information.

The spatial relationship, the TCI state, or the QCL information indicates a transmission beam of the uplink signal. In other words, the terminal needs to send the uplink signal by using the transmission beam indicated in the spatial relationship, the TCI state, or the QCL information. In this case, if the first information is carried in the spatial relationship, the TCI state, or the QCL information, it indicates that the terminal needs to send the uplink signal by using the transmission beam and the first TA or the first TAG, so that the transmission beam and the first TA or the first TAG are indicated together. In this way, signaling overheads can be reduced, and communication efficiency can be improved. Specifically, the first information may be a field in the spatial relationship, the TCI state, or the QCL information. The field may include a plurality of bits, so that the first TA or the first TAG is indicated by using a value of a single bit in the plurality of bits or a combination of values of the plurality of bits. The first TAG indicated by the plurality of bits may be a global index, or may be a local index. The global index indicates that the first TAG is a TAG in all TAGs corresponding to all cells. All the cells may be all cells configured by the network device for the terminal. The local index indicates that the first TAG is a TAG in a plurality of TAGs corresponding to a specific cell. The specific cell may be a cell that sends the spatial relationship, the TCI state, or the QCL information, that is, a local cell, or may be another cell, to implement cross-cell scheduling. The another cell may be specifically indicated by using the field in the spatial relationship, the TCI state, or the QCL information. This is not limited in this application. In addition, an indication principle of the plurality of bits is similar to an indication principle of the MAC-CE message 1 or the MAC-CE message 2, and reference may be made for understanding. Details are not described again. For specific implementation of the spatial relationship, the TCI state, and the QCL information, refer to related descriptions in the following "(a) QCL information implementation" and "(b) Spatial relationship implementation". Details are not described herein. The power control parameter set is a parameter set used to calculate a transmit power of the uplink signal, and includes a path loss reference resource and the like. The first information is carried in the power control parameter set, so that a power control parameter and the first TA or the first TAG can be indicated, thereby reducing signaling overheads, and improving communication efficiency. It should be noted that, in the foregoing descriptions, the network device may flexibly choose to use the manner in which a single bit is used for indication or the manner in which a plurality of bits are used for indication. For example, if a quantity of TAs or TAGs is small, the manner in which a single bit is used for indication is used to flexibly indicate each TA or TAG. If a quantity of TAs or TAGs is large, the manner in which a plurality of bits are used for indication is used to indicate more TAs or TAGs. This is not limited in this application. In addition, the first information may not only indicate a TA or a TAG corresponding to a cell of the network device, but also indicate a TA or a TAG corresponding to a cell of another network device, to implement cross-cell scheduling. For example, the network device may include a cell identifier of the another network device in a cell identifier field corresponding to the SRS resource set in the MAC-CE message 1, or in a serving cell identifier field in the MAC-CE message 2, to indicate that a terminal located in the cell of the another network device needs to send the uplink signal by using the corresponding TA or TAG.

### Manner 2: Implicit indication

The implicit indication indicates that the first TA or the first TAG may be determined based on a first signal. For example, a TA or a TAG corresponding to the first signal is used as the first TA or the first TAG. The first signal may be a spatial relationship reference signal of the uplink signal. In other words, the first TA or the first TAG is determined by using a reference signal for determining a spatial relationship. The spatial relationship may also be understood as a transmission beam, a spatial filter, or the like. For details, refer to the foregoing descriptions. The first signal may be an SSB, the spatial relationship reference signal, or a path loss reference signal corresponding to the uplink signal. In other words, the first TA or the first TAG is determined by using a reference signal for determining a path loss. Alternatively, the first signal may be a reference signal specially used to determine a TA or a TAG, and the reference signal is referred to as a TA reference signal in this application. The first signal may include one or more of the following: an SRS, an SSB, a CSI-RS, a TRS, a PDCCH, a PDSCH, a PUCCH, or a PUSCH. To determine the first TA or the first TAG by using the first signal, an association relationship may be established between the first signal and the TA or the TAG. For example, an association relationship between the SSB or the SRS and the TAG may be configured by using RRC. In this way, provided that one SSB or SRS is indicated to the terminal device as the first signal, the terminal device can perform uplink transmission by using a TA or a TAG corresponding to the SSB or the SRS. In addition to the SSB, an association relationship may also be established, by using the foregoing method, between a signal of another type mentioned above and the TA or the TAG. In addition to RRC configuration, the association relationship between the first signal and the TAG may be indicated by using other signaling, for example, a MAC-CE message or a DCI message. The CSI-RS may be one or more of the following: a CSI-RS in a CSI-RS resource set configured with a repetition (repetition) parameter, a CSI-RS in a CSI-RS resource set configured with TRS information (a trs-info parameter), a CSI-RS in a CSI-RS resource set configured with neither the repetition parameter nor the TRS information parameter, a periodic CSI-RS, a semi-persistent CSI-RS, or an aperiodic CSI-RS. In addition, the CSI-RS may alternatively be a combination of the foregoing plurality of types. For example, the CSI-RS may be both the CSI-RS in the CSI-RS resource set configured with the repetition parameter and the periodic CSI-RS, that is, a periodic CSI-RS in the CSI-RS resource set configured with the repetition parameter. For another example, the CSI-RS may be both the CSI-RS in the CSI-RS resource set configured with the repetition parameter and the semi-persistent CSI-RS, that is, a semi-persistent CSI-RS in the CSI-RS resource set configured with the repetition parameter. For still another example, the CSI-RS may be both the CSI-RS in the CSI-RS resource set configured with the TRS information and the periodic CSI-RS, that is, a periodic CSI-RS in the CSI-RS resource set configured with the TRS information.

It can be learned that the terminal may determine, based on a spatial relationship between signals, the first TA or the first TAG corresponding to the uplink signal, and the network device does not need to additionally indicate the first TA or the first TAG. In this way, a quantity of interactions between the network device and the terminal may be reduced, thereby reducing communication overheads, and improving communication efficiency.

The implicit indication may be implemented by using the QCL information, the spatial relationship, and a beam reference relationship, which are separately described below.

### (a) QCL information implementation

The network device may send the second information to the terminal. Correspondingly, the terminal receives the second information from the network device. The second information may indicate the first signal. Specifically, the second information may be the QCL information. The QCL information includes a reference signal resource, namely, the first signal, and is carried in a TCI state. A type of the QCL information may include one or more of the following: a type A (type A), a type B (type B), a type C (type C), a type D (type D), a type E (type E), a type F (type F), or a type G (type G). The TCI state is an information structure, and includes beam-related information, for example, an index of a TCI (tci-StateId), and a plurality of pieces of QCL information, for example, two pieces of QCL information. Each piece of QCL information includes one reference signal (reference signal) resource, for example, the first signal, and the type of the QCL information. In this way, the terminal may determine, based on the type of the QCL information, that the TA or the TAG corresponding to the first signal, for example, the first TA or the first TAG, needs to be used for uplink transmission. Details are described below.

During uplink transmission and downlink transmission, meanings of reference signal resources in type-A QCL information are different. During uplink transmission, the reference signal resource in the type-A QCL information is used to determine a TA or a TAG used for uplink transmission. In other words, the terminal needs to send the uplink signal by using the TA or the TAG corresponding to the reference signal resource in the type-A QCL information. During downlink transmission, the reference signal resource in the type-A QCL information is used to determine {a Doppler frequency shift, Doppler spread, an average delay, and delay spread} of a downlink signal. Specifically, the type-A QCL information may further include indication information (denoted as indication information 1), indicating whether the type-A QCL information is used for uplink transmission or downlink transmission. If the indication information 1 indicates that the type-A QCL information is used for downlink transmission, the type-A QCL information is used to determine {the Doppler frequency shift, the Doppler spread, the average delay, and the delay spread} of the downlink signal. If the indication information 1 indicates that the type-A QCL information is used for uplink transmission, the type-A QCL information indicates a TA or a TAG used for uplink transmission, for example, the first TA or the first TAG. In other words, the reference signal resource in the type-A QCL information is a referenced object, and uplink transmission using the type-A QCL information needs to use a TA or a TAG the same as that of the reference signal resource in the type-A QCL information.

Similar to the type-A QCL information, during uplink transmission and downlink transmission, meanings of reference signal resources in type-B QCL information are different. During uplink transmission, the reference signal resource in the type-B QCL information is used to determine a TA or a TAG used for uplink transmission. In other words, the terminal needs to send the uplink signal by using the TA or the TAG corresponding to the reference signal resource in the type-B QCL information. During downlink transmission, the reference signal resource in the type-B QCL information is used to determine {a Doppler frequency shift and Doppler spread} of a downlink signal. Specifically, the type-B QCL information may further include indication information (denoted as indication information 2), indicating whether the type-B QCL information is used for uplink transmission or downlink transmission. If the indication information 2 indicates that the type-B QCL information is used for downlink transmission, the type-B QCL information is used to determine {the Doppler frequency shift and the Doppler spread} of the downlink signal. If the indication information 2 indicates that the type-B QCL information is used for uplink transmission, the type-B QCL information indicates a TA or a TAG used for uplink transmission, for example, the first TA or the first TAG. In other words, the reference signal resource in the type-B QCL information is a referenced object, and uplink transmission using the type-B QCL information needs to use a TA or a TAG the same as that of the reference signal resource in the type-B QCL information.

Similar to the type-A QCL information, during uplink transmission and downlink transmission, meanings of reference signal resources in type-C QCL information are different. During uplink transmission, the reference signal resource in the type-C QCL information is used to determine a TA or a TAG used for uplink transmission. In other words, the terminal needs to send the uplink signal by using the TA or the TAG corresponding to the reference signal resource in the type-C QCL information. During downlink transmission, the reference signal resource in the type-C QCL information is used to determine {a Doppler frequency shift and an average delay} of a downlink signal. Specifically, the type-C QCL information may further include indication information (denoted as indication information 3), indicating whether the type-C QCL information is used for uplink transmission or downlink transmission. If the indication information 3 indicates that the type-C QCL information is used for downlink transmission, the type-C QCL information is used to determine {the Doppler frequency shift and the average delay} of the downlink signal. If the indication information 3 indicates that the type-C QCL information is used for uplink transmission, the type-C QCL information indicates a TA or a TAG used for transmission, for example, the first TA or the first TAG. In other words, the reference signal resource in the type-C QCL information is a referenced object, and uplink transmission using the type-C QCL information needs to use a TA or a TAG the same as that of the reference signal resource in the type-C QCL information.

During uplink transmission, in addition to indicating an uplink transmission beam, type-D QCL information may further indicate a TA or a TAG corresponding to uplink transmission. In other words, a reference signal resource in the type-D QCL information is a referenced object, and uplink transmission using the type-D QCL information needs to use a TA or a TAG the same as that of the reference signal resource in the type-D QCL information.

Type-E QCL information or type-F QCL information is a new type of QCL information. The type-E QCL information or the type-F QCL information is directly used for the TA or the TAG corresponding to uplink transmission. In other words, a reference signal resource in the type-E QCL information or the type-F QCL information is a referenced object, and uplink transmission using the type-E QCL information or the type-F QCL information needs to use a TA or a TAG the same as that of the reference signal resource in the type-E QCL information or the type-F QCL information. It should be understood that the new QCL information type being the type E or the type F is merely an example listed for ease of description, and the new QCL information type may alternatively be replaced with a type 1, a type 2, a type 3, or the like, or may be replaced with a type H, the type G, or the like. This is not limited in this application.

For the terminal, the terminal is configured with an association relationship between a reference signal resource in the QCL information and a TA or a TAG corresponding to the reference signal resource, for example, the association relationship between the SSB and the TA or the TAG, the association relationship between the SRS and the TA or the TAG, an association relationship between the PUCCH and the TA or the TAG, or an association relationship between the PUSCH and the TA or the TAG, namely, the association relationship between the first signal and the TA or the TAG. The TA may be the first TA, the TAG may be the first TAG, and the association relationship may also be considered as an association relationship between the first signal and the first TA or the first TAG. Optionally, the association relationship may be carried in the configuration information or any other possible information. This is not limited in this application. In this way, the terminal may determine, based on the type of the QCL information, that a TA or a TAG the same as that of the reference signal resource in the QCL information, namely, a TA or a TAG the same as that of the first signal, needs to be used for uplink transmission, to determine the first TA or the first TAG based on the association relationship between the first signal and the first TA or the first TAG.

It should be noted that the first signal (denoted as a first signal 1) corresponding to the foregoing association relationship and the first signal (denoted as a first signal 2) corresponding to the spatial relationship reference signal of the uplink signal may be a same signal or may be different signals. For example, the first signal 1 is an SRS 1, the first signal 2 is an SRS 2, and the SRS 1 and the SRS 2 are different SRSs. However, a transmission beam of the SRS 1 needs to be used for uplink transmission of the SRS 2, in other words, the SRS 1 is a spatial relationship reference signal of the SRS 2, and there is a beam reference relationship between the SRS 1 and the SRS 2. For another example, the first signal 1 is an SSB, and the first signal 2 is an SRS. A reception beam of the SSB needs to be used for uplink transmission of the SRS, in other words, the SSB is a spatial relationship reference signal of the SRS, and there is a beam reference relationship between the SSB and the SRS. For still another example, the first signal 1 is an SRS, and the first signal 2 is a PUSCH. A transmission beam of the SRS needs to be used for uplink transmission of the PUSCH, in other words, the SRS is a spatial relationship reference signal of the PUSCH, and there is a beam reference relationship between the SRS and the PUSCH. It can be learned that when the first signal 1 and the first signal 2 are different signals, the first signal 1 and the first signal 2 meet a beam reference relationship. For specific implementation of the beam reference relationship, refer to related descriptions in the following "(c) Beam reference relationship implementation". Details are not described herein.

### (b) Spatial relationship implementation

Similar to implementation of the TCI state, the second information may be the spatial relationship. The first signal may be a spatial relationship reference signal resource in the spatial relationship, that is, a reference signal resource used to determine an uplink transmission beam. Alternatively, the first signal may be a reference signal resource that is carried in the spatial relationship and that specially indicates the TA or the TAG.

### (c) Beam reference relationship implementation

The beam reference relationship refers to a beam reference relationship between signals. To be specific, a transmission/reception beam of a signal needs to refer to a transmission/reception beam of another signal, or a transmission/reception beam the same as that of another signal needs to be used for sending/receiving a signal. In two signals having the beam reference relationship, one signal may also be referred to as the spatial relationship reference signal of the other signal. The beam reference relationship between signals may include but is not limited to: a beam reference relationship between uplink signals, a beam reference relationship between downlink signals, and a beam reference relationship between an uplink signal and a downlink signal.

The beam reference relationship between the uplink signals may include but is not limited to one or more of the following: a beam reference relationship between SRSs, where for example, a transmission beam the same as that of an SRS 1 needs to be used for sending an SRS 2; a beam reference relationship between PUCCHs, where for example, a transmission beam the same as that of a PUCCH 1 needs to be used for sending a PUCCH 2; a beam reference relationship between PUSCHs, where for example, a transmission beam the same as that of a PUSCH 1 needs to be used for sending a PUSCH 2; a beam reference relationship between an SRS and a PUCCH, where for example, a transmission beam the same as that of the SRS needs to be used for sending the PUCCH; a beam reference relationship between an SRS and a PUSCH, where for example, a transmission beam the same as that of the SRS needs to be used for sending the PUSCH; and a beam reference relationship between a PUCCH and a PUSCH, where for example, a transmission beam the same as that of the PUSCH needs to be used for sending the PUCCH, or a transmission beam the same as that of the PUCCH needs to be used for sending the PUSCH.

The beam reference relationship between the downlink signals may include but is not limited to one or more of the following: a beam reference relationship between an SSB and a CSI-RS or a TRS, where for example, a reception beam the same as that of the SSB needs to be used for receiving the CSI-RS or the TRS; a beam reference relationship between a CSI-RS and a PDCCH or a PDSCH, where for example, a reception beam the same as that of the CSI-RS needs to be used for receiving the PDCCH or the PDSCH; a beam reference relationship between a TRS and a PDCCH or a PDSCH, where for example, a reception beam the same as that of the TRS needs to be used for receiving the PDCCH or the PDSCH; or a beam reference relationship between a PDCCH and a PDSCH, where for example, a reception beam the same as that of the PDSCH needs to be used for receiving the PDCCH, or a reception beam the same as that of the PDCCH needs to be used for receiving the PDSCH. It can be learned that the beam reference relationship of the downlink signal has a specific hierarchical relationship. The downlink signal refers to a reception beam of an SSB. In other words, the SSB is a reference source of the downlink signal.

The beam reference relationship between an uplink signal and a downlink signal may include but is not limited to one or more of the following: a beam reference relationship between an SRS and a downlink signal, a beam reference relationship between a PUSCH and a downlink signal, or a beam reference relationship between a PUCCH and a downlink signal. In other words, a reception beam of one or more of the following of a downlink signal may be used as a transmission beam of an SRS: an SSB, a CSI-RS, a TRS, a PDCCH, or a PDSCH.

For the terminal, the beam reference relationship between signals (including the beam reference relationship of the uplink signal) is preconfigured on the terminal. The terminal may determine, based on the beam reference relationship of the uplink signal, that the first signal needs to be referenced for sending the uplink signal, so that it is determined that a transmission beam the same as that of the first signal needs to be used for sending the uplink signal. The terminal device may determine the first TA or the first TAG by using the beam reference relationship. Specifically, for one uplink signal, a TA or a TAG of the uplink signal is determined based on a reference signal that determines an uplink transmission beam of the uplink signal. In other words, if a transmission beam of one uplink signal is determined based on one reference signal, the uplink signal uses a TA or a TAG corresponding to the reference signal as a TA or a TAG used for uplink sending of the uplink signal.

The foregoing describes how to determine a TA or a TAG by using the first signal. The first signal may be one of a spatial relationship reference signal, a path loss reference signal, or a TA reference signal. It should be noted that, when a first signal corresponding to one uplink signal does not directly correspond to a TA or a TAG, a TA or a TAG corresponding to another signal associated with the first signal may be used. The another signal may be a spatial relationship reference signal, a path loss reference signal, a timing reference signal, a frequency offset reference signal, or a TA reference signal of the first signal. The following uses an example in which the another signal is a spatial relationship reference signal for description. This principle is also applicable to a case in which the another signal is a path loss reference signal or a TA reference signal. For example, a PUCCH uses an SRS as a spatial relationship reference signal, and the SRS has no corresponding TA or TAG. In this case, a corresponding TA or TAG of a spatial relationship reference signal of the SRS, for example, a CSI-RS, is used. If the CSI-RS does not have a corresponding TA or TAG either, a corresponding TA or TAG of a spatial relationship reference signal corresponding to the CSI-RS, for example, one SSB, may be used. In other words, source tracing may be performed based on the beam reference relationship until a level of reference signal having a corresponding TA or TAG is found, or source tracing is directly performed to a source SSB, and a TA or a TAG corresponding to the SSB is used.

It should be understood that, in this application, that the terminal determines the first TA or the first TAG is used as an example. The terminal may alternatively determine another TA or TAG, for example, a second TA or the second TAG. This is not limited in this application.

In conclusion, it can be learned from the method provided in the foregoing embodiment that when one cell of the network device corresponds to a plurality of stations, the terminal may configure a plurality of TAs or a plurality of TAGs corresponding to the cell. In this way, when performing uplink transmission with a station of the network device, the terminal may select a proper TA or TAG, for example, the first TA or the first TAG, to send the corresponding uplink signal, to enable uplink transmission of the terminal to be synchronized with the plurality of stations and avoid a performance loss of uplink transmission.

Optionally, with reference to the foregoing embodiment, in a first possible application scenario, a plurality of TAs or TAGs are used for PUSCH transmission. For example, a DCI message for scheduling the PUSCH transmission indicates the plurality of TAs or TAGs, or a DCI message for scheduling the PUSCH transmission indicates a plurality of SRSs, for example, two SRSs, and each SRS corresponds to a different TA or TAG. For example, a first SRS corresponds to the first TA or the first TAG, and a second SRS corresponds to the second TA or the second TAG. The terminal performs PUSCH transmission by using the plurality of TAs or TAGs. Specifically, how to perform PUSCH transmission by using the plurality of TAs or TAGs depends on a PUSCH transmission mode. If the PUSCH transmission mode is a time-division transmission model, a corresponding TA or TAG may be used for uplink transmission of each PUSCH. For example, numbers of two TAs or TAGs corresponding to time-division PUSCH transmission are respectively #1 and #2. A sequence of the TAs or TAGs used for the time-division PUSCH transmission may be {#1, #2, #1, #2, ...}, in other words, the two TAs or TAGs are alternately used for the PUSCH transmission. The foregoing transmissions may correspond to a same or different redundancy versions of a same PUSCH, or may correspond to different PUSCHs. If the PUSCH transmission mode is a simultaneous transmission model, the PUSCH is transmitted by using a plurality of TAs or TAGs simultaneously.

When the PUSCH is transmitted by using the plurality of TAs or TAGs, each of a plurality of transport streams corresponding to the PUSCH may use a corresponding TA or TAG. For example, one PUSCH transport stream includes two parts: a first transport stream and a second transport stream. The terminal may transmit the first transport stream by using the first TA or the first TAG, and transmit the second transport stream by using the second TA or the second TAG. The first transport stream and the second transport stream each may include one or more transport streams. The PUSCH transport stream may correspond to the TA or the TAG in the following manners. Manner 1: Perform division based on a code division multiple access (code division multiplexing, CDM) group of a demodulation reference signal (demodulation reference signal, DMRS) port. Specifically, a plurality of transport streams correspond to a plurality of DMRS ports, and each transport stream corresponds to one DMRS port. The network device indicates a DMRS port of a PUSCH by using DCI. DMRSs of a PUSCH may be divided into a plurality of CDM groups. A correspondence between a transport stream and a plurality of TAs or TAGs may be divided based on CDM groups. In other words, different CDM groups correspond to different TAs or TAGs. In this way, the plurality of TAs or TAGs are respectively used to transmit transport streams corresponding to a plurality of CDM groups. It may be specified that a plurality of TAs or TAGs can be used to simultaneously transmit a PUSCH only under a specific condition. The specific condition includes one or a combination of the following: A quantity of transport streams is greater than X (where X is an integer, for example, X = 1 or X = 2). A quantity of CDM groups is greater than Y (where Y is an integer, for example, Y = 1).

Manner 2: Perform even division based on a quantity of DMRS ports. A plurality of DMRS ports corresponding to a PUSCH are divided into a plurality of groups, and each group corresponds to one TA or TAG. The following specifically uses two TAs or TAGs as an example for description. When the quantity of the DMRS ports cannot be evenly divided, for example, when the quantity of the DMRS ports is an odd number, and the DMRS ports cannot be evenly divided into two groups, a first group may have one more DMRS port than a second group. In other words, a quantity of DMRSs in the first group is N/2 (rounded up), N is a quantity of DMRS ports, and remaining ports are in the second group.

Manner 3: The first two ports correspond to the first TA or TAG, and remaining ports correspond to the second TA or TAG.

Manner 4: The DCI directly indicates two groups of DMRS ports corresponding to two TAs or TAGs. The terminal device may directly determine, by using the DCI indication, the two groups of DMRS ports corresponding to the two TAs or TAGs. In this method, it is required that a plurality of TAs or TAGs can be used only when a quantity of ports is greater than 2. In addition, the correspondence between the plurality of transport streams of the PUSCH and the plurality of TAs or TAGs may alternatively be determined based on a correspondence between the plurality of transport streams of the PUSCH and a plurality of uplink transmission beams. Each TA or TAG corresponds to one uplink transmission beam. Specific transport streams corresponding to the uplink transmission beam are specific transport streams corresponding to the TA or the TAG corresponding to the uplink transmission beam.

Optionally, with reference to the foregoing embodiment, in a second possible application scenario, the first TA or the first TAG corresponding to the uplink signal may be predefined by the protocol. For example, the first TA or the first TAG may be one or more of the following: the 1 ^{st} TAG/the last TAG/a TAG having a smallest index/a TAG having a largest index in a plurality of TAGs corresponding to a cell in which the terminal is located, a TA corresponding to the 1 ^{st} TAG/the last TAG/the TAG having the smallest index/the TAG having the largest index in the plurality of TAGs corresponding to the cell in which the terminal is located, a TAG or TA corresponding to the 1^{st} PUCCH/the last PUCCH/a PUCCH having a smallest index/a PUCCH having a largest index in all PUCCHs of the cell in which the terminal is located, a TAG or TA corresponding to the 1 ^{st} PUSCH/the last PUSCH/a PUSCH having a smallest index/a PUSCH having a largest index in all PUSCHs of the cell in which the terminal is located, a TAG or TA corresponding to the 1 ^{st} SRS set/the last SRS set/an SRS set having a smallest index/an SRS set having a largest index in all SRS sets of the cell in which the terminal is located, a TAG or TA corresponding to a PDCCH for scheduling the PUSCH, a TAG or TA corresponding to a CORESET group in which the PDCCH for scheduling the PUSCH is located, a TAG or TA corresponding to the 1 ^{st} CORESET/the last CORESET/a CORESET having a smallest index/a CORESET having a largest index in a CORESET group of the cell in which the terminal is located, or a TAG or TA corresponding to the 1^{st} CORESET/the last CORESET/a CORESET having a smallest index/a CORESET having a largest index in all CORESETs detected by the terminal last time. This is not limited in this application. The TAG or TA corresponding to the CORESET or the CORESET group is a TAG or TA corresponding to a PDSCH that carries the CORESET or the CORESET group, or may be a TAG or TA corresponding to an SSB referenced by the PDSCH.

Optionally, with reference to the foregoing embodiment, in a third possible application scenario, the explicit indication and the implicit indication may be implemented in combination. Details are as follows:

### Manner A: Explicit indication is preferred.

That the explicit indication is preferred means that the terminal uses an explicitly indicated TA or TAG, for example, the first TA or the first TAG indicated by the first information, as the TA or the TAG required for sending the uplink signal. In other words, regardless of whether the network device implicitly indicates the terminal, the terminal always uses the explicitly indicated TA or TAG to send the uplink signal. In addition, for specific implementation of the explicit indication, refer to related descriptions in the foregoing "Manner 1: Explicit indication". Details are not described herein again.

### Manner B: Implicit indication is preferred.

That the implicit indication is preferred means that the terminal determines a TA or a TAG based on the implicit indication, for example, the first TA or the first TAG corresponding to the first signal, to use the TA or the TAG as the TA or the TAG required for sending the uplink signal. In other words, regardless of whether the network device explicitly indicates the terminal, the terminal always uses the TA or the TAG corresponding to the implicit indication to send the uplink signal. In addition, for specific implementation of the implicit indication, refer to related descriptions in the foregoing "Manner 2: Implicit indication". Details are not described herein again.

### Manner C: Compatible with the explicit indication and the implicit indication.

Compatible with the explicit indication and the implicit indication means that the terminal may send an uplink signal by using the explicitly indicated TA or TAG, or may send an uplink signal by using the TA or the TAG corresponding to the implicit indication. In this case, for a same uplink signal, the explicitly indicated TA or TAG should be consistent with the TA or the TAG corresponding to the implicit indication. For different uplink signals, the explicitly indicated TA or TAG may be consistent with or inconsistent with the TA or the TAG corresponding to the implicit indication. For example, a TA is used as an example. For example, the terminal may send the SRS 1 by using the explicitly indicated TA 1, and then send the SRS 2 by using the implicitly indicated TA 2. The TA 1 and the TA 2 may be the same or may be different. For example, the terminal may send an SRS by using an explicitly indicated TA 3, and then send a PUSCH by using an implicitly indicated TA 4. The TA 3 and the TA 4 may be the same or different. For example, the terminal may send the PUSCH 1 by using an explicitly indicated TA 5, and then send the PUSCH 2 by using an implicitly indicated TA 6. The TA 5 and the TA 6 may be the same or different. For example, the terminal may send a PUSCH by using an explicitly indicated TA 7, and then send a PUCCH by using an implicitly indicated TA 8. The TA 7 and the TA 8 may be the same or different. For example, the terminal may send the PUCCH 1 by using an explicitly indicated TA 9, and then send the PUCCH 2 by using an implicitly indicated TA 10. The TA 9 and the TA 10 may be the same or different. In addition, for different uplink signals, TAs or TAGs explicitly indicated at any two times may be consistent or may be inconsistent, and TAs or TAGs corresponding to any two implicit indications may be consistent or may be inconsistent. This is not limited in this application. A sequence of the explicit indication and the implicit indication is not limited. For example, the terminal may first send an uplink signal based on the explicit indication, and then send a remaining uplink signal based on the implicit indication. Alternatively, the terminal may first send an uplink signal based on the implicit indication, and then send a remaining uplink signal based on the explicit indication. Alternatively, the explicit indication and the implicit indication may be cyclically used. This is not limited in this application.

Optionally, with reference to the foregoing embodiment, in a fourth possible application scenario, after S601, the network device may further update a TA value corresponding to one of the plurality of TAs, for example, a TA value corresponding to the first TA or a TA value corresponding to the first TAG. For ease of understanding, the following uses the first TA or the first TAG as an example for description. Specifically, as the terminal moves, a distance between the terminal and the network device, namely, a distance between the terminal and a station, changes accordingly, so that an existing TA value of the terminal, for example, the TA value corresponding to the first TA or the first TAG, does not match a current distance. Therefore, the network device may send, to the terminal based on the current distance, an updated TA value corresponding to the first TA or the first TAG. For example, the network device may send indication information to the terminal, and the indication information carries the index of the first TA or the index of the first TAG, and an updated TA value corresponding to the index. In this way, the terminal may determine the first TA or the first TAG based on the index of the first TA or the index of the first TAG, to update, based on the updated TA value, the TA value corresponding to the first TA or the first TAG, to enable an updated TA value to match the current distance. On this basis, the TA value corresponding to the first TA or the first TAG in S603 may be an updated TA value, or may be a TA value that is not updated. This is not limited in this application.

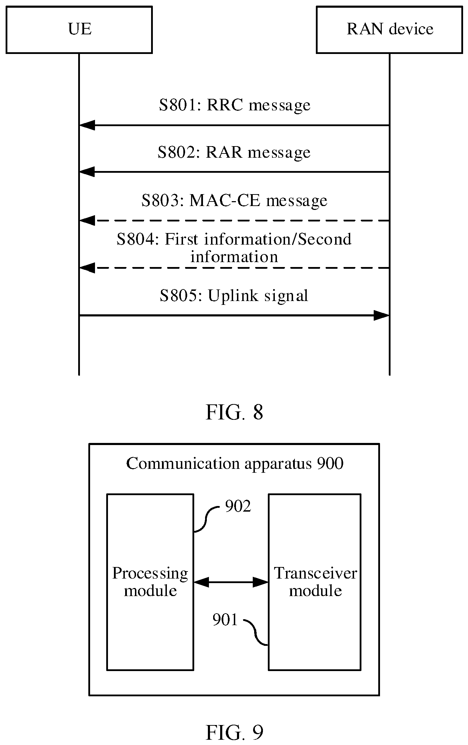

With reference to FIG. 6, the foregoing describes an overall procedure of the communication method provided in embodiments of this application. With reference to FIG. 8, the following describes in detail a procedure of the communication method shown in FIG. 6 in a specific application scenario.

For example, FIG. 8 is a schematic flowchart 2 of communication according to an embodiment of this application. The communication method is applicable to communication between UE (the foregoing terminal) and a radio access network (radio access network, RAN) device (the foregoing network device). As shown in FIG. 8, the communication method may include the following steps. S801: The RAN device sends an RRC message to the UE. Correspondingly, the UE receives the RRC message from the RAN device.

The RRC message includes configuration information. The configuration information includes one or more of the following: a plurality of TAGs corresponding to one cell of the RAN device or a plurality of TA offsets corresponding to one cell of the RAN device. Optionally, the configuration information further includes an association relationship between a first signal and a first TA or a first TAG, the first TAG is one of the plurality of TAGs, and the first TA is one TA corresponding to one of the plurality of TA offsets. In addition, for specific implementation of S801, refer to related descriptions in S601 and S602. Details are not described herein again.

S802: The RAN device sends a RAR message to the UE. Correspondingly, the UE receives the RAR message from the RAN device.

The RAR message may include one initial TA value corresponding to a TAG in the plurality of TAGs. For specific implementation, refer to related descriptions in S602. Details are not described herein again. In addition, S802 may be performed for a plurality of times, and an execution sequence of S801 and S802 is not limited.

S803: The RAN device sends a MAC-CE message to the UE. Correspondingly, the UE receives the MAC-CE message from the RAN device.

The MAC-CE message includes an updated TA value corresponding to one of a plurality of TAs. For specific implementation, refer to related descriptions in the foregoing fourth possible application scenario. Details are not described herein again. In addition, S803 is an optional step. To be specific, if moving of the terminal enables that a TA value corresponding to one of the plurality of TAs does not match a distance between the terminal and a station, S803 may be performed; otherwise, S803 may not be performed.

S804: The RAN device sends first information or second information to the UE. Correspondingly, the UE receives the first information or the second information from the RAN device.

For specific implementation of the first information, refer to related descriptions in the foregoing "Manner 1: Explicit indication". For specific implementation of the second information, refer to related descriptions in the foregoing "Manner 2: Implicit indication". Details are not described herein again. In addition, S804 is an optional step. To be specific, if the terminal determines a TA or a TAG based on a beam reference relationship, S804 may not be performed; otherwise, S804 is performed. In addition, for overall implementation of S804, refer to related descriptions in S602. Details are not described herein again.

S805: The UE sends an uplink signal to the RAN device. Correspondingly, the RAN device receives the uplink signal from the UE.

The UE may send the uplink signal to the RAN device based on a TA value corresponding to the determined TA or TAG, so that the RAN device receives the uplink signal at start time of an uplink slot.

The communication method provided in embodiments of this application is described above in detail with reference to FIG. 6 to FIG. 8. A communication apparatus configured to perform the communication method provided in embodiments of this application is described below in detail with reference to FIG. 9 to FIG. 11.

For example, FIG. 9 is a schematic diagram 1 of a structure of a communication apparatus according to an embodiment of this application. As shown in FIG. 9, a communication apparatus 900 includes modules configured to perform functions of the terminal in the method shown in FIG. 6, for example, a transceiver module 901 and a processing module 902. The transceiver module 901 is configured to implement the transceiver function in the foregoing method embodiment, and the processing module 902 is configured to implement the processing function in the foregoing method embodiment. For ease of description, FIG. 9 shows only main components of the communication apparatus.

In some embodiments, the communication apparatus 900 may be used in the communication system shown in FIG. 4 or FIG. 5, and may perform some functions of the terminal in the method shown in FIG. 6.

The processing module 902 is configured to determine a first timing advance TA or a first timing advance group TAG, to control, based on the first TA or the first TAG, the transceiver module 901 to send a corresponding uplink signal to a network device. The first TA is one of a plurality of TAs corresponding to one cell of the network device, and the first TAG is one of a plurality of TAGs corresponding to one cell of the network device.

In a possible design solution, the first TA or the first TAG is determined based on first information, and the first information indicates the first TA or the first TAG corresponding to the uplink signal. Optionally, the first information is carried in one or more of the following: an RRC message, a MAC-CE message, a DCI message, a spatial relationship, a TCI state, or QCL information.

In another possible design solution, the first TA or the first TAG is determined based on a first signal, and the first signal is an SSB, a spatial relationship reference signal, or a path loss reference signal corresponding to the uplink signal.

Optionally, the transceiver module 901 is further configured to receive second information from the network device. The second information indicates the first signal.

Further, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, an association relationship exists between the first signal and the first TA or the first TAG.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, the transceiver module 901 is further configured to receive configuration information from the network device before the processing module 902 determines the first TA or the first TAG. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the transceiver module 901 is further configured to receive a random access response RAR message from the network device before the processing module 902 determines the first TA or the first TAG. The RAR message includes an initial TA value corresponding to the first TAG, and the initial TA value corresponding to the first TAG and a TA offset corresponding to the first TAG are used to determine a TA corresponding to the first TAG.

Further, the processing module 902 is further configured to determine, based on a field in the RAR message, a TAG corresponding to an initial TA value in the RAR message. Alternatively, the processing module 902 is further configured to determine, based on an SSB corresponding to the RAR message, a TAG corresponding to an initial TA value in the RAR message.

Further, the SSB corresponding to the RAR message is associated with one TAG, and the processing module 902 is further configured to determine that the TAG associated with the SSB is the TAG corresponding to the initial TA value in the RAR message.

In a possible design solution, the uplink signal includes one or more of the following: an SRS, a PUSCH, or a PUCCH.

Optionally, the transceiver module 901 may also include a sending module and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9), and the storage module stores a program or instructions. When the processing module executes the program or the instructions, the communication apparatus 900 is enabled to perform some functions of the terminal in the method shown in FIG. 6.

It should be understood that the processing module in the communication apparatus 900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 900 may be a terminal, may be a chip (system) or another part or component that may be disposed in the terminal, or may be an apparatus including the terminal. This is not limited in this application.

In addition, for technical effects of the communication apparatus 900, refer to corresponding technical effects of the method shown in FIG. 6. Details are not described herein again.

In some other embodiments, the communication apparatus 900 may be used in the communication system shown in FIG. 4 or FIG. 5, and may perform some other functions of the terminal in the method shown in FIG. 6.

The transceiver module 901 is configured to receive first information from the network device. The processing module 902 is configured to control, based on a first TA or a first TAG, the transceiver module 901 to send a corresponding uplink signal to the network device. The first information indicates the first TA or the first TAG corresponding to the uplink signal. The first TA is one of a plurality of TAs corresponding to one cell of the network device, and the first TAG is one of a plurality of TAGs corresponding to one cell of the network device.

In a possible design solution, the first information is carried in one or more of the following: an RRC message, a MAC-CE message, a DCI message, a spatial relationship, a TCI state, or QCL information.

In a possible design solution, the transceiver module 901 is further configured to receive configuration information from the network device before the processing module 902 controls, based on the first TA or the first TAG, the transceiver module 901 to send the uplink signal to the network device. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the transceiver module 901 is further configured to receive a random access response RAR message from the network device before the processing module 902 controls, based on the first TA or the first TAG, the transceiver module 901 to send the uplink signal to the network device. The RAR message includes an initial TA value corresponding to the first TAG, and the initial TA value corresponding to the first TAG and a TA offset corresponding to the first TAG are used to determine a TA corresponding to the first TAG.

Further, the processing module 902 is further configured to determine, based on a field in the RAR message, a TAG corresponding to an initial TA value in the RAR message. Alternatively, the processing module 902 is further configured to determine, based on an SSB corresponding to the RAR message, a TAG corresponding to an initial TA value in the RAR message.

Further, the SSB corresponding to the RAR message is associated with one TAG, and the processing module 902 is further configured to determine that the TAG associated with the SSB is the TAG corresponding to the initial TA value in the RAR message. In a possible design solution, the uplink signal includes one or more of the following: an SRS, a PUSCH, or a PUCCH. Optionally, the transceiver module 901 may also include a sending module and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9), and the storage module stores a program or instructions. When the processing module executes the program or the instructions, the communication apparatus 900 is enabled to perform some other functions of the terminal in the method shown in FIG. 6.

It should be understood that the processing module in the communication apparatus 900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 900 may be a terminal, may be a chip (system) or another part or component that may be disposed in the terminal, or may be an apparatus including the terminal. This is not limited in this application.

In addition, for technical effects of the communication apparatus 900, refer to corresponding technical effects of the method shown in FIG. 6. Details are not described herein again.

In some other embodiments, the communication apparatus 900 may be used in the communication system shown in FIG. 4 or FIG. 5, and may perform some other functions of the terminal in the method shown in FIG. 6.

The processing module 902 is configured to determine a first TA or a first TAG based on a first signal, to control, based on the first TA or the first TAG, the transceiver module 901 to send a corresponding uplink signal to the network device. The first signal is an SSB, a spatial relationship reference signal, or a path loss reference signal corresponding to the uplink signal. The first TA is one of a plurality of TAs corresponding to one cell of the network device, and the first TAG is one of a plurality of TAGs corresponding to one cell of the network device.

Optionally, the transceiver module 901 is further configured to receive second information from the network device. The second information indicates the first signal.

Further, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, an association relationship exists between the first signal and the first TA or the first TAG.

In a possible design solution, a first TA or a first TAG is determined based on a first signal, an association relationship exists between the first signal and the first TA or the first TAG, and the first signal is an SSB, a spatial relationship reference signal, or a path loss reference signal corresponding to an uplink signal.

In a possible design solution, the transceiver module 901 is further configured to receive configuration information from the network device before the processing module 902 determines the first TA or the first TAG based on the first signal. The configuration information includes one or more of the following: the plurality of TAGs corresponding to one cell of the network device or a plurality of TA offsets corresponding to one cell of the network device, where the plurality of TAGs include the first TAG, and the plurality of TA offsets include a TA offset corresponding to the first TA.

Optionally, each of the plurality of TA offsets corresponds to at least a part of the plurality of TAGs. Optionally, the transceiver module 901 is further configured to receive a random access response RAR message from the network device before the processing module 902 determines the first TA or the first TAG based on the first signal. The RAR message includes an initial TA value corresponding to the first TAG, and the initial TA value corresponding to the first TAG and a TA offset corresponding to the first TAG are used to determine a TA corresponding to the first TAG. Further, the processing module 902 is further configured to determine, based on a field in the RAR message, a TAG corresponding to an initial TA value in the RAR message. Alternatively, the processing module 902 is further configured to determine, based on an SSB corresponding to the RAR message, a TAG corresponding to an initial TA value in the RAR message.

Further, the SSB corresponding to the RAR message is associated with one TAG, and the processing module 902 is further configured to determine that the TAG associated with the SSB is the TAG corresponding to the initial TA value in the RAR message.

In a possible design solution, the uplink signal includes one or more of the following: an SRS, a PUSCH, or a PUCCH.

Optionally, the transceiver module 901 may also include a sending module and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9), and the storage module stores a program or instructions. When the processing module executes the program or the instructions, the communication apparatus 900 is enabled to perform some other functions of the terminal in the method shown in FIG. 6.

It should be understood that the processing module in the communication apparatus 900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 900 may be a terminal, may be a chip (system) or another part or component that may be disposed in the terminal, or may be an apparatus including the terminal. This is not limited in this application.

In addition, for technical effects of the communication apparatus 900, refer to corresponding technical effects of the method shown in FIG. 6. Details are not described herein again.

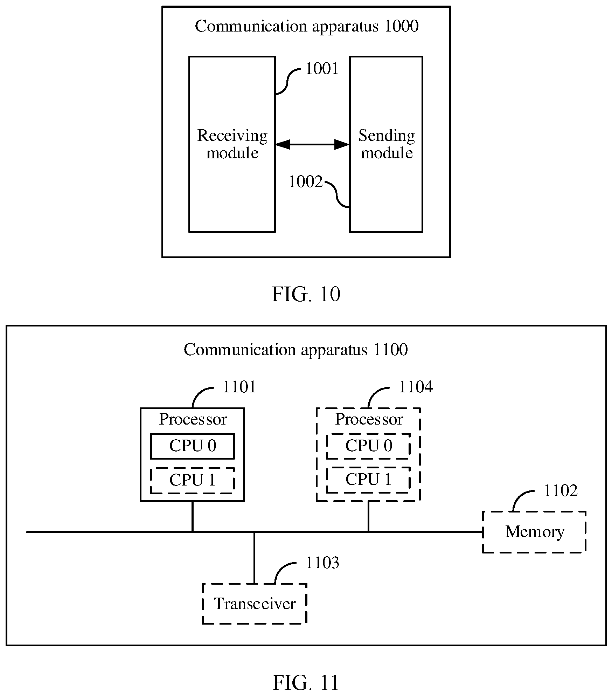

For example, FIG. 10 is a schematic diagram 2 of a structure of a communication apparatus according to an embodiment of this application. As shown in FIG. 10, a communication apparatus 1000 includes modules configured to perform functions of the network device in the method shown in FIG. 6, for example, a receiving module 1001 and a sending module 1002. The receiving module 1001 is configured to implement a receiving function in the foregoing method embodiment, and the sending module 1002 is configured to implement a sending function in the foregoing method embodiment. For ease of description, FIG. 10 shows only main components of the communication apparatus.

The communication apparatus 1000 may be used in the communication system shown in FIG. 4 or FIG. 5, and may perform some functions of the network device in the method shown in FIG. 6. The sending module 1002 is configured to send configuration information to a terminal. The receiving module 1001 is configured to receive an uplink signal from the terminal. The configuration information includes one or more of the following: a plurality of TAGs corresponding to one cell of the network device or a plurality of TA offsets corresponding to one cell of the network device.

In a possible design solution, the sending module 1002 is further configured to send first information to the terminal before the receiving module 1001 receives the uplink signal from the terminal. The first information indicates a first TA or a first TAG corresponding to the uplink signal, the first TAG is one of the plurality of TAGs, and the first TA is one TA corresponding to one of the plurality of TA offsets.

Optionally, the first information is carried in one or more of the following: an RRC message, a MAC-CE message, a DCI message, a spatial relationship, a TCI state, or QCL information.

In another possible design solution, the sending module 1002 is further configured to send second information to the terminal before the receiving module 1001 receives the uplink signal from the terminal. The second information indicates a first signal, the first signal is an SSB, a spatial relationship reference signal, or a path loss reference signal corresponding to the uplink signal, the first signal is used to determine a first TA or a first TAG corresponding to the uplink signal, the first TAG is one of the plurality of TAGs, and the first TA is one TA corresponding to one of the plurality of TA offsets.

Optionally, the second information is QCL information, and a type of the QCL information includes one or more of the following: a type A, a type B, a type C, a type D, a type E, a type F, or a type G.

Optionally, the first signal includes one or more of the following: an SRS, an SSB, a CSI-RS, a TRS, a PDCCH, a PDSCH, a PUCCH, or a PUSCH.

Optionally, the configuration information further includes an association relationship between the first signal and the first TA or the first TAG.

In a possible design solution, the sending module 1002 is further configured to send a RAR message to the terminal before the receiving module 1001 receives the uplink signal from the terminal. The RAR message includes an initial TA value corresponding to the first TAG. Optionally, a field in the RAR message is used to determine a TAG corresponding to an initial TA value in the RAR message; or an SSB corresponding to the RAR message is used to determine a TAG corresponding to an initial TA value in the RAR message.

Further, the SSB corresponding to the RAR message is associated with one TAG, and the TAG associated with the SSB is the TAG corresponding to the initial TA value in the RAR message.

In a possible design solution, the uplink signal includes one or more of the following: an SRS, a PUSCH, or a PUCCH.

In a possible design solution, each of the plurality of TA offsets corresponds to at least a part of the plurality of TAGs.

Optionally, the sending module 1002 and the receiving module 1001 may also be integrated into one module, for example, a transceiver module (not shown in FIG. 10). The transceiver module is configured to implement a sending function and a receiving function of the communication apparatus 1000.

Optionally, the communication apparatus 1000 may further include a processing module (not shown in FIG. 10). The processing module is configured to implement a function of the network device in the method shown in FIG. 6 other than a transceiver function.

Optionally, the communication apparatus 1000 may further include a storage module (not shown in FIG. 10), and the storage module stores a program or instructions. When the processing module executes the program or the instructions, the communication apparatus 1000 is enabled to perform the function of the network device in the method shown in FIG. 6.

It should be understood that the processing module in the communication apparatus 1000 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1000 may be a network device, may be a chip (system) or another part or component that may be disposed in the network device, or may be an apparatus including the network device. This is not limited in this application.

In addition, for technical effects of the communication apparatus 1000, refer to corresponding technical effects of the method shown in FIG. 6. Details are not described herein again.

For example, FIG. 11 is a schematic diagram 3 of a structure of a communication apparatus according to an embodiment of this application. The communication apparatus may be a terminal device or a network device, or may be a chip (system) or another component or assembly that may be disposed in the terminal device or the network device. As shown in FIG. 11, a communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following specifically describes components of the communication apparatus 1100 with reference to FIG. 11.

The processor 1101 is a control center of the communication apparatus 1100, may be one processor, may be a collective term of a plurality of processing elements, or may be referred to as a logic circuit. For example, the processor 1101 is one or more central processing units (central processing units, CPUs), may be an application-specific integrated circuit (application specific integrated circuit, ASIC), or is configured as one or more integrated circuits for implementing embodiments of this application, for example, one or more microprocessors (digital signal processors, DSPs), or one or more field programmable gate arrays (field programmable gate arrays, FPGAs). Optionally, the processor 1101 may perform a function of the network device or the terminal in the method shown in FIG. 6 by running or executing a software program stored in the memory 1102 and invoking data stored in the memory 1102.

In specific implementation, in an embodiment, the processor 1101 may include one or more CPUs, for example, a CPU 0 and a CPU 1 shown in FIG. 11.

In specific implementation, in an embodiment, the communication apparatus 1100 may alternatively include a plurality of processors, for example, the processor 1101 and the processor 1104 shown in FIG. 11. Each of the processors may be a single-core processor (single-CPU), or may be a multi-core processor (multi-CPU). The processor herein may refer to one or more devices, circuits, and/or processing cores configured to process data (for example, computer program or instructions).

The memory 1102 is configured to store a software program for executing the solutions of this application, and the processor 1101 controls the software program, so that the method shown in FIG. 6 is performed.

Optionally, the memory 1102 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory 1102 may be integrated with the processor 1101, or may exist independently, and is coupled to the processor 1101 through an interface circuit or an input/output interface (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network device or communicate with another terminal device. For another example, the communication apparatus 1100 is a network device, and the transceiver 1103 may be configured to communicate with a terminal or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It should be noted that a structure of the communication apparatus 1100 shown in FIG. 11 does not constitute a limitation on the communication apparatus. An actual communication apparatus may include more or fewer components than those shown in the figure, combine some components, or have different component arrangement.

In addition, for technical effects of the communication apparatus 1100, refer to the technical effects of the communication method in the foregoing method embodiment. Details are not described herein again.

An embodiment of this application provides a communication system. The communication system includes the one or more terminals and the one or more network devices.

It should be understood that in this embodiment of this application, the processor may be a CPU, or the processor may be another general purpose processor, a DSP, an ASIC, a field-programmable gate array FPGA or another programmable logic device, a discrete gate or a transistor logic device, a discrete hardware component, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (such as a circuit), firmware, or any combination thereof. When the software is used to implement the embodiments, all or a part of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A professional technician may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a terminal, a first timing advance TA or a first timing advance group TAG, wherein the first TA is one of a plurality of TAs corresponding to one cell of a network device, and the first TAG is one of a plurality of TAGs corresponding to one cell of the network device; and
sending, by the terminal, a corresponding uplink signal to the network device based on the first TA or the first TAG.

2. The method according to claim 1, wherein the first TA or the first TAG is determined based on first information, and the first information indicates the first TA or the first TAG corresponding to the uplink signal.

3. The method according to claim 1, wherein the first TA or the first TAG is determined based on a first signal, and the first signal is a synchronization signal and physical broadcast channel block SSB, a spatial relationship reference signal, or a path loss reference signal that corresponds to the uplink signal.

4. The method according to claim 3, wherein the method further comprises:
receiving, by the terminal, second information from the network device, wherein the second information indicates the first signal.

5. The method according to claim 3 or 4, wherein an association relationship exists between the first signal and the first TA or the first TAG.

6. The method according to any one of claims 1 to 5, wherein before the determining, by a terminal, a first TA or a first TAG, the method further comprises:
receiving, by the terminal, configuration information from the network device, wherein the configuration information comprises one or more of the following: the plurality of TAGs corresponding to one cell of the network device or a plurality of TA offsets corresponding to one cell of the network device, wherein the plurality of TAGs comprise the first TAG, and the plurality of TA offsets comprise a TA offset corresponding to the first TA.

7. The method according to claim 6, wherein before the determining, by a terminal, a first TA or a first TAG, the method further comprises:
receiving, by the terminal, a random access response RAR message from the network device, wherein the RAR message comprises an initial TA value corresponding to the first TAG, and the initial TA value corresponding to the first TAG and a TA offset corresponding to the first TAG are used to determine a TA corresponding to the first TAG.

8. The method according to claim 7, wherein the method further comprises:
determining, by the terminal based on a field in the RAR message, a TAG corresponding to an initial TA value in the RAR message; or
determining, by the terminal based on an SSB corresponding to the RAR message, a TAG corresponding to an initial TA value in the RAR message.

9. The method according to claim 8, wherein the SSB corresponding to the RAR message is associated with one TAG, and the determining, by the terminal based on an SSB corresponding to the RAR message, a TAG corresponding to an initial TA value in the RAR message comprises:
determining, by the terminal, that the TAG associated with the SSB is the TAG corresponding to the initial TA value in the RAR message.

10. A communication method, wherein the method comprises:
sending, by a network device, configuration information to a terminal, wherein the configuration information comprises one or more of the following: a plurality of TAGs corresponding to one cell of the network device or a plurality of TA offsets corresponding to one cell of the network device; and
receiving, by the network device, an uplink signal from the terminal.

11. The method according to claim 10, wherein before the receiving, by the network device, an uplink signal from the terminal, the method further comprises:
sending, by the network device, first information to the terminal, wherein the first information indicates a first TA or a first TAG corresponding to the uplink signal, the first TAG is one of the plurality of TAGs, and the first TA is one TA corresponding to one of the plurality of TA offsets.

12. The method according to claim 2 or 11, wherein the first information is carried in one or more of the following: a radio resource control RRC message, a medium access control-control element MAC-CE message, a downlink control information DCI message, a spatial relationship, a transmission configuration indication TCI state, or quasi-colocation QCL information.

13. The method according to claim 10, wherein before the receiving, by the network device, an uplink signal from the terminal, the method further comprises:
sending, by the network device, second information to the terminal, wherein the second information indicates a first signal, the first signal is an SSB, a spatial relationship reference signal, or a path loss reference signal corresponding to the uplink signal, the first signal is used to determine a first TA or a first TAG corresponding to the uplink signal, the first TAG is one of the plurality of TAGs, and the first TA is one TA corresponding to one of the plurality of TA offsets.

14. The method according to claim 4 or 13, wherein the second information is QCL information, and a type of the QCL information comprises one or more of the following: a type A, a type B, a type C, a type D, a type E, a type F, or a type G.

15. The method according to any one of claims 3, 4, 13, and 14, wherein the first signal comprises one or more of the following: a sounding reference signal SRS, a synchronization signal and physical broadcast channel block SSB, a channel state information reference signal CSI-RS, a tracking reference signal TRS, a physical downlink control channel PDCCH, a physical downlink shared channel PDSCH, a physical uplink control channel PUCCH, or a physical uplink shared channel PUSCH.

16. The method according to any one of claims 13 to 15, wherein the configuration information further comprises an association relationship between the first signal and the first TA or the first TAG.

17. The method according to any one of claims 11 to 16, wherein before the receiving, by the network device, an uplink signal from the terminal, the method further comprises:
sending, by the network device, a RAR message to the terminal, wherein the RAR message comprises an initial TA value corresponding to the first TAG.

18. The method according to claim 17, wherein a field in the RAR message is used to determine a TAG corresponding to an initial TA value in the RAR message; or an SSB corresponding to the RAR message is used to determine a TAG corresponding to an initial TA value in the RAR message.

19. The method according to claim 18, wherein the SSB corresponding to the RAR message is associated with one TAG, and the TAG associated with the SSB is the TAG corresponding to the initial TA value in the RAR message.

20. The method according to any one of claims 1 to 19, wherein the uplink signal comprises one or more of the following: an SRS, a PUSCH, or a PUCCH.

21. The method according to any one of claims 6 and 8 to 20, wherein each of the plurality of TA offsets corresponds to at least a part of the plurality of TAGs.

22. The method according to any one of claims 6 and 8 to 21, wherein the plurality of TA offsets are in one-to-one correspondence with the plurality of TAGs.

23. A communication apparatus, wherein the apparatus comprises a module configured to perform the method according to any one of claims 1 to 9, or a module configured to perform the method according to any one of claims 10 to 22.

24. A communication apparatus, comprising a processor, wherein the processor is configured to perform the method according to any one of claims 1 to 9, or perform the method according to any one of claims 10 to 22.

25. A communication apparatus, comprising a processor and a memory, wherein the memory is configured to store computer instructions, and when the processor executes the instructions, the communication apparatus is enabled to perform the method according to any one of claims 1 to 9, or perform the method according to any one of claims 10 to 22.
